(19) Europäisches Patentamt
European Patent Office
Office européen des brevets

(11) **EP 3 248 442 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **15701173.5**

(22) Anmeldetag: **21.01.2015**

(51) Int Cl.:
*H05G 2/00* (2006.01)     *G02B 17/06* (2006.01)
*B23K 26/06* (2014.01)

(86) Internationale Anmeldenummer:
**PCT/EP2015/051099**

(87) Internationale Veröffentlichungsnummer:
**WO 2016/116147 (28.07.2016 Gazette 2016/30)**

(54) **STRAHLFÜHRUNGSEINRICHTUNG, EUV-STRAHLUNGSERZEUGUNGSVORRICHTUNG UND VERFAHREN ZUM EINSTELLEN EINES STRAHLDURCHMESSERS UND EINES ÖFFNUNGSWINKELS EINES LASERSTRAHLS**

BEAM GUIDANCE DEVICE, EUV BEAM GENERATION DEVICE AND METHOD FOR ADJUSTING A BEAM DIAMETER AND AN APERTURE ANGLE OF A LASER BEAM

DISPOSITIF DE GUIDAGE DE FAISCEAU, DISPOSITIF DE GÉNÉRATION DE RAYONNEMENT EUV ET PROCÉDÉ DE RÉGLAGE DU DIAMÈTRE DE FAISCEAU ET D'UN ANGLE D'OUVERTURE D'UN FAISCEAU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.11.2017 Patentblatt 2017/48**

(73) Patentinhaber: **TRUMPF Lasersystems for Semiconductor Manufacturing GmbH 71254 Ditzingen (DE)**

(72) Erfinder:
• **LAMBERT, Martin 71404 Korb (DE)**
• **ERGIN, Tolga 74321 Bietigheim-Bissingen (DE)**
• **SCHWARZBÄCK, Thomas 73547 Lorch (DE)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
EP-A1- 1 679 538     US-A- 6 128 138
US-A1- 2014 085 741

**Beschreibung**

Die vorliegende Erfindung betrifft eine Strahlführungseinrichtung zur Führung eines Laserstrahls, insbesondere in Richtung auf einen Zielbereich zur Erzeugung von EUV-Strahlung. Die Erfindung betrifft auch eine EUV-Strahlungserzeugungsvorrichtung sowie ein Verfahren zum Einstellen eines Strahldurchmessers und eines Öffnungswinkels eines Laserstrahls.

Die Strahlführungseinrichtung ist typischer Weise zur Strahlführung eines Laserstrahls, beispielsweise eines $CO_2$-Laserstrahls, mit sehr hoher Leistung (> 10 kW) ausgebildet. Die Strahlführungseinrichtung kann beispielsweise in eine EUV-Strahlungserzeugungsvorrichtung integriert sein, um den Laserstrahl in Richtung auf einen Zielbereich zur Erzeugung von EUV-Strahlung zu führen, an dem der Lasersrahl mit hoher Genauigkeit fokussiert wird. Eine andere Anwendung für eine Strahführungseinrichtung zur Führung eines Laserstsrahls mit sehr hoher Leistung (>10 kW) stellt eine Laserbearbeitungsmaschine dar, die beispielsweise für Schweißanwendungen verwendet werden kann.

Eine Strahlführungseinrichtung für eine EUV-Strahlerzeugungsvorrichtung mit einer Einrichtung zur Vergrößerung des Strahldurchmessers (Strahlaufweitung), welche in einem Ausführungsbeispiel zwei Off-Axis Parabolspiegel aufweist, ist aus der US 2011/0140008 A1 bekannt geworden. Die dort beschriebene Strahlführungseinrichtung dient zur Führung von Laserstrahlung, die in einer Strahlerzeugungseinrichtung in Form eines Treiberlasersystems erzeugt und verstärkt wurde. Die Strahlführungseinrichtung führt den Laserstrahl von dem Treiberlasersystem zu einem fokussierenden Element bzw. zu einer Fokussiereinrichtung, welche dazu dient, den Laserstrahl in einem Zielbereich zu fokussieren, in dem ein Target-Material bereitgestellt wird, welches bei der Bestrahlung mit dem Laserstrahl in einen Plasma-Zustand übergeht und hierbei EUV-Strahlung emittiert.

In der WO 2014/048563 A1 der Anmelderin ist eine Strahlführungseinrichtung für eine EUV-Strahlungserzeugungsvorrichtung beschrieben, welche eine Einrichtung zur Vergrößerung oder zur Verkleinerung des Strahldurchmessers des Laserstrahls aufweist, die einen ersten Off-Axis Paraboloidspiegel mit einer ersten, konvex gekrümmten reflektierenden Oberfläche sowie einen zweiten Off-Axis Paraboloidspiegel mit einer konkav gekrümmten reflektierenden Oberfläche aufweist. Die Strahlführungseinrichtung weist eine Bewegungseinrichtung auf, die ausgebildet ist, zur Veränderung des Öffnungswinkels des Laserstrahls einen Abstand zwischen der ersten und der zweiten reflektierenden Oberfläche zu verändern. Bei der Veränderung des Abstandes verändert sich nicht nur der Öffnungswinkel des Laserstrahls, sondern auch (geringfügig) der Strahldurchmesser.

Ein von einer Strahlerzeugungseinrichtung in Form einer Laserquelle emittierter Laserstrahl kann sowohl bezüglich des Strahldurchmessers als auch bezüglich des Öffnungswinkels (d.h. der Strahldivergenz/Strahlkonvergenz) in Abhängigkeit von der emittierten Leistung der Laserquelle variieren. Auch bei baugleichen Laserquellen kann der emittierte Laserstrahl sowohl bezüglich des Strahldurchmessers als auch bezüglich des Öffnungswinkels bei identischen Betriebsparametern ggf. von Exemplar zu Exemplar variieren.

Aufgabe der Erfindung

Es ist die Aufgabe der vorliegenden Erfindung, eine Strahlführungseinrichtung, eine EUV-Strahlungserzeugungsvorrichtung sowie ein Verfahren der eingangs genannten Art dahingehend weiterzubilden, dass ein anwendungsgerechter Laserstrahl erzeugt werden kann.

Gegenstand der Erfindung

Diese Aufgabe wird erfindungsgemäß gelöst durch eine Strahlführungseinrichtung der eingangs genannten Art, umfassend: eine Einstelleinrichtung zur Einstellung eines Strahldurchmessers und eines Öffnungswinkels des Laserstrahls, die Einstelleinrichtung umfassend: einen ersten Spiegel mit einer ersten gekrümmten reflektierenden Oberfläche, einen zweiten Spiegel mit einer zweiten gekrümmten reflektierenden Oberfläche, einen dritten Spiegel mit einer dritten gekrümmten reflektierenden Oberfläche, einen vierten Spiegel mit einer vierten gekrümmten reflektierenden Oberfläche, sowie eine Bewegungseinrichtung, die ausgebildet ist, zur Einstellung des Strahldurchmessers und des Öffnungswinkels des Laserstrahls die erste und die vierte reflektierende Oberfläche relativ zueinander zu bewegen, insbesondere zu verschieben, sowie unabhängig davon die zweite und dritte reflektierende Oberfläche gemeinsam relativ zu der ersten und der vierten reflektierenden Oberfläche zu bewegen, insbesondere zu verschieben.

Der erste bis vierte Spiegel sind im Strahlengang des Laserstrahls aufeinander folgend angeordnet. Es versteht sich, dass ggf. weitere optische Elemente, z.B. in Form von Faltungsspiegeln, im Strahlengang zwischen den vier Spiegeln angeordnet werden können. Soll die Einstelleinrichtung dazu dienen, den Strahldurchmesser des Laserstrahls zu vergrößern, trifft der einfallende Laserstrahl typischerweise kollimiert bzw. im Wesentlichen kollimiert auf den ersten Spiegel auf. Soll die Einstelleinrichtung dazu dienen, den Strahldurchmesser des Laserstrahls zu verkleinern, trifft der einfallende Laserstrahl typischerweise kollimiert auf den vierten Spiegel auf, d.h. der Laserstrahl durchläuft die Einstelleinrichtung in umgekehrter Propagationsrichtung. Da die Spiegel der Strahlführungseinrichtung hohen Laserleistungen standhalten müssen, sind diese typischer Weise massiv ausgebildet, d.h. die reflektierende Oberfläche ist typischer Weise an einem massiven, beispielsweise metallischen Grundkörper gebildet, in den Kühlkanäle zur Kühlung des jeweiligen Spiegels eingebracht sein können. Die Krümmung der reflektierenden Oberfläche eines jeweiligen Spiegels ist konstant, d.h. die reflektierende Oberfläche verformt sich aufgrund einer von der auftreffenden Laserstrahlung erzeugten, durch die Kühlung vergleichsweise geringen Temperaturerhöhung nur geringfügig in einer vorbekannten, berechenbaren Weise. Bei einer solchen Verformung ggf. erzeugte Aberrationen können erforderlichenfalls kompensiert oder bereits bei der Auslegung der reflektierenden Oberfläche der jeweiligen Spiegel berücksichtigt werden. Adaptive Spiegel, beispielsweise Membranspiegel, bei denen die Krümmung der reflektierenden Oberfläche in gewissen Grenzen eingestellt werden kann, eignen sich aufgrund der hohen Laserleistungen typischer Weise nicht für die vorliegende Strahlführungseinrichtung.

Die hier beschriebene Strahlführungseinrichtung ermöglicht es, den Strahldurchmesser und den Öffnungswinkel des Laserstrahls (im Wesentlichen) unabhängig voneinander einzustellen, so dass auch während des Betriebs der Strahlführungseinrichtung der Laserstrahl anwendungsgerecht optimiert, d.h. entweder in seinen Eigenschaften variiert oder in seinen Eigenschaften konstant gehalten werden kann. Die Einstelleinrichtung kann mit einer Steuer- und/oder Regeleinrichtung in Verbindung stehen, um den Strahldurchmesser und den Öffnungswinkel des Laserstrahls zu steuern bzw. zu regeln, um beispielsweise das dynamische thermische Verhalten der in der Strahlführungseinrichtung bzw. in der EUV-Strahlungserzeugungsvorrichtung vorhandenen Bauteile zu berücksichtigen.

Der Öffnungswinkel (bzw. die Divergenz/Konvergenz) des Laserstrahls kann beispielsweise eingestellt werden, indem der erste und der vierte Spiegel relativ zueinander bewegt werden, wobei der Abstand zwischen diesen beiden Spiegeln verändert wird, wie dies in der eingangs zitierten WO 2014/048563 A1 beschrieben ist. Bei der Veränderung des Abstands zwischen dem ersten und dem vierten Spiegel wird jedoch nicht nur der Öffnungswinkel, sondern (als parasitärer Effekt) auch der Strahldurchmesser des Laserstrahls geringfügig verändert. Durch die unabhängige Bewegung des zweiten und des dritten Spiegels relativ zu dem ersten und dem vierten Spiegel kann die Änderung des Strahldurchmessers des Laserstrahls, die bei der Veränderung des Öffnungswinkels (d.h. der Divergenz- /Konvergenzänderung) des Laserstrahls erzeugt wird, kompensiert werden, so dass sich die gewünschte Divergenz/Konvergenz des Laserstrahls einstellen lässt, ohne den Strahldurchmesser zu ändern. Entsprechend kann durch die gemeinsame Bewegung des zweiten und dritten Spiegels der Strahldurchmesser des Laserstrahls eingestellt werden, wobei sich der Öffnungswinkel des Laserstrahls (bzw. die Konvergenz/Divergenz des Laserstrahls) (als parasitärer Effekt) nur geringfügig verändert. Durch eine Veränderung des Abstandes zwischen dem ersten und dem vierten Spiegel kann die Veränderung des Öffnungswinkels - falls gewünscht - kompensiert werden. Die Bewegung der ersten und der vierten reflektierenden Oberfläche relativ zueinander sowie die Bewegung der zweiten und der dritten Oberfläche relativ zu der ersten und der vierten Oberfläche können zeitlich versetzt oder zumindest teilweise gleichzeitig erfolgen.

Grundsätzlich wäre ggf. zusätzlich zu dem ersten und vierten Spiegel nur ein einzelner weiterer Spiegel ausreichend, um den Strahldurchmesser des Laserstrahls einzustellen. Es hat sich aber als günstig herausgestellt, vier Spiegel zur Einstellung des Strahldurchmessers und/oder des Öffnungswinkels zu verwenden, um bei der Veränderung des Strahldurchmessers die Energieverteilung bzw. die Intensität des Laserstrahls über den Strahlquerschnitt des Laserstrahls möglichst konstant zu halten. Bei der Verwendung einer Einstelleinrichtung mit nur drei Spiegeln würde hingegen eine in der Regel unerwünschte Umverteilung der Energie des Laserstrahls über den Strahlquerschnitt stattfinden, selbst wenn eine solche Einstelleinrichtung in der Grundstellung (s.u.) betrieben wird.

Die Einstelleinrichtung kann ausgebildet sein, den Laserstrahl ohne einen Zwischenfokus oder mit einem, zwei, oder drei Zwischenfoki im Strahlengang zwischen den Spiegeln abzubilden. Die Anzahl der Zwischenfoki wird typischer Weise durch die Art der Krümmung (konvex oder konkav) der reflektierenden Oberflächen der einzelnen Spiegel bestimmt. Die Art der Krümmung der vier reflektierenden Oberflächen der Einstelleinrichtung wird so festgelegt, dass die Einstelleinrichtung die gewünschte Anzahl an Zwischenfoki erzeugt.

Bei einer Ausführungsform sind die erste und dritte reflektierende Oberfläche konvex gekrümmt und die zweite und die vierte reflektierende Oberfläche sind konkav gekrümmt. Bei dieser Ausführungsform durchläuft der Laserstrahl die Einstelleinrichtung typischer Weise ohne einen Zwischenfokus, was sich bei der Verwendung von hohen Laserleistungen als günstig herausgestellt hat. Wie oben beschrieben wurde, ist es aber auch möglich, in der Einstelleinrichtung einen oder mehrere Zwischenfoki zu erzeugen. Wird ein Zwischenfokus erzeugt, sind die erste und vierte reflektierende Oberfläche typischer Weise konvex gekrümmt und die zweite und dritte reflektierende Oberfläche sind konkav gekrümmt. Wird der Laserstrahl mit zwei Zwischenfoki abgebildet, ist typischer Weise lediglich die erste reflektierende Oberfläche konvex gekrümmt und die zweite bis vierte reflektierende Oberfläche sind konkav gekrümmt. Bei der Abbildung mit drei Zwischenfoki sind typischer Weise alle vier reflektierenden Oberflächen konkav gekrümmt.

Bei einer Ausführungsform sind der zweite Spiegel und der dritte Spiegel als bevorzugt nicht symmetrische (Off-Axis) Ellipsoidspiegel ausgebildet. Die Verwendung von zwei Ellipsoidspiegeln, die gemeinsam relativ zu dem ersten und dem vierten Spiegel bewegt, insbesondere verschoben werden können, ermöglicht die Einstellung des Strahldurchmessers des Laserstrahls, ohne dass hierbei der Öffnungswinkel des Laserstrahls deutlich verändert wird. Hierbei wirkt sich günstig aus, dass jeder der beiden Ellipsoidspiegel zwei Brennpunkte aufweist. Bei einem nicht symmetrischen Ellipsoidspiegel (auch als Off-Axis-Ellipsoidspiegel bezeichnet) ist die reflektierende Oberfläche, die einen Teilbereich bzw. ein Segment eines Rotationsellipsoids bildet, zu den beiden Hauptachsen des Rotationsellipsoids versetzt angeordnet. Die Brennweiten, d.h. die Abstände der beiden Fokuspositionen vom Zentrum des Ellipsoidspiegels, sind in diesem Fall nicht gleich groß. Die bzw. ein jeweiliger Ellipsoidspiegel kann alternativ auch symmetrisch ausgebildet sein. In diesem Fall verläuft eine der beiden Hauptachsen des Rotationsellipsoids durch das Zentrum der reflektierenden Oberfläche, so dass die reflektierende Oberfläche bezüglich dieser Hauptachse eine Drehsymmetrie aufweist. Bei einem symmetrischen Ellipsoidspiegel sind die Brennweiten, d.h. die Abstände der beiden Fokuspositionen, zu dem auf der Hauptachse liegenden Zentrum des Ellipsoidspiegels gleich groß.

Die Ellipsoidspiegel sind typischer Weise so angeordnet bzw. so ausgebildet, dass eine der beiden Fokuspositionen des zweiten Spiegels mit einer der beiden Fokuspositionen des dritten Spiegels übereinstimmt. Da die beiden Ellipsoidspiegel typischer Weise in konstantem Abstand voneinander angeordnet sind, bleibt diese Anordnung der Fokuspositionen auch bei der gemeinsamen Bewegung des zweiten und dritten Spiegels erhalten.

Durch die gemeinsame Bewegung der beiden Ellipsoidspiegel wird der Abstand zu dem ersten Spiegel entweder vergrößert oder verkleinert. Durch eine Vergrößerung/Verkleinerung des Abstands zu dem ersten Spiegel vergrößert/verkleinert sich die Länge der Strecke, über die der Laserstrahl zwischen dem ersten und dem zweiten Spiegel verläuft und somit auch der Strahlquerschnitt, mit dem der Laserstrahl auf die zweite reflektierende Oberfläche des zweiten Spiegels auftrifft. Wird der Abstand zwischen dem ersten und dem vierten Spiegel konstant gehalten, verkürzt/vergrößert sich gleichzeitig die Länge der Strecke, über die der Laserstrahl zwischen dem dritten Spiegel und dem vierten Spiegel verläuft. Ob bei der Bewegung des zweiten und dritten Spiegels auf den ersten Spiegel zu bzw. vom ersten Spiegel weg der Strahldurchmesser des Laserstrahls sich vergrößert oder verkleinert, hängt davon ab, ob die erste reflektierende Oberfläche eine konkave oder eine konvexe Krümmung aufweist sowie ob zwischen der ersten reflektierenden Oberfläche und der zweiten reflektierenden Oberfläche ein Zwischenfokus gebildet ist. Ist kein Zwischenfokus zwischen der ersten und der zweiten reflektierenden Oberfläche gebildet und weist die erste Oberfläche eine konvexe Krümmung auf, verkleinert/vergrößert sich der Strahldurchmesser, wenn der Abstand zwischen dem ersten und dem zweiten Spiegel abnimmt/zunimmt. Weist der erste Spiegel eine konkave Krümmung auf, so vergrößert/verkleinert sich der Strahldurchmesser entsprechend, wenn der Abstand zwischen dem ersten Spiegel und dem zweiten Spiegel abnimmt/zunimmt.

Bei einer Ausführungsform sind der erste Spiegel und der vierte Spiegel als Parabolspiegel, insbesondere als Off-Axis Parabolspiegel, ausgebildet. Bei der Strahlaufweitung von Laserstrahlung mit großen Strahldurchmessern und hohen Laserleistungen (>1 kW), wie sie bei Strahlführungseinrichtungen zur Erzeugung von EUV-Strahlung typischerweise benötigt werden, hat sich die Verwendung von Paraboloid-Spiegeln als günstig erwiesen, da bei der Verwendung von sphärischen Spiegeln zur Strahlaufweitung aufgrund der großen Strahldurchmesser die sphärischen Aberrationen verhältnismäßig groß sind. Bei der Verwendung von Paraboloid-Spiegeln wird hingegen bei einer geeigneten Ausrichtung der Spiegel zueinander eine theoretisch fehlerfreie Abbildung ermöglicht. Sofern die sphärischen Aberrationen trotz der Verwendung von großen Strahldurchmessern noch akzeptabel sind, können der erste und vierte Spiegel ggf. auch als sphärische Spiegel ausgebildet sein, da sphärische Spiegel verhältnismäßig leicht herzustellen sind.

Bei einer Weiterbildung ist die Bewegungseinrichtung für eine relative Bewegung des ersten Spiegels und des vierten Spiegels ausgehend von einer Grundstellung ausgebildet, in der eine erste Fokusposition des ersten Spiegels mit einer ersten Fokusposition des zweiten Spiegels, eine zweite Fokusposition des zweiten Spiegels mit einer ersten Fokusposition des dritten Spiegels sowie eine zweite Fokusposition des dritten Spiegels mit einer Fokusposition des vierten Spiegels übereinstimmen. Bei dem zweiten und dritten Spiegel, die jeweils zwei Fokuspositionen aufweisen, handelt es sich typischer Weise um Ellipsoidspiegel, bei dem ersten und vierten Spiegel um Paraboloidspiegel oder ggf. (bei kleinen Strahldurchmessern) um sphärische Spiegel.

In der Grundstellung stimmen die Fokuspositionen von jeweils zwei im Strahlweg aufeinander folgenden Spiegeln überein. In der Grundstellung werden daher - zumindest theoretisch - keine Abbildungsfehler erzeugt. Bei der Verwendung von zwei symmetrischen Ellipsoidspiegeln, bei denen die eingangsseitige und die ausgangsseitige Brennweite übereinstimmen, liegen die Fokuspositionen aller vier Spiegel typischer Weise auf einer gemeinsamen Geraden, die - abhängig von den jeweiligen Brennweiten und Einfallswinkeln - unter einem im Prinzip beliebigen Winkel bezüglich der Einfallsrichtung des Laserstrahls ausgerichtet sein kann. Bei der Verwendung von nicht symmetrischen (Off-Axis)-Ellipsoidspiegeln ist dies nicht der Fall, so dass mehr Freiheitsgrade für das optischen Design der Einstelleinrichtung zur Verfügung stehen.

Bei einer Variation des Abstands des ersten und des vierten Spiegels, die beispielsweise als Off-Axis Parabolspiegel ausgebildet sein können, aus der Grundstellung heraus nehmen die Abbildungsfehler zu. In der Grundstellung wird aus einem kollimiert auf den ersten Spiegel auftreffender Laserstrahl am vierten Spiegel ein kollimiert austretender Laserstrahl erzeugt. Bei der Änderung der relativen Position des ersten und vierten Spiegels wird der Öffnungswinkel des Laserstrahls beeinflusst, so dass aus einem kollimierten Laserstrahl, wie er in der Grundstellung erzeugt wird, ein geringfügig konvergenter oder divergenter Laserstrahl gebildet wird. Durch die Vergrößerung des Abstands aus der Grundposition heraus wird typischerweise aus dem kollimierten austretenden Laserstrahl ein (geringfügig) konvergenter Laserstrahl erzeugt. Bei einer Verkleinerung des Abstands aus der Grundposition heraus wird typischerweise ein (geringfügig) divergenter austretender Laserstrahl erzeugt. Die bei der Veränderung des Öffnungswinkels auftretende geringfügige Änderung des Strahldurchmessers kann durch die gemeinsame Bewegung des zweiten und dritten Spiegels kompensiert werden (s.u.).

Bei einer weiteren Ausführungsform ist die Bewegungseinrichtung zur gemeinsamen Verschiebung des zweiten und dritten Spiegels entlang einer gemeinsamen Verschiebeachse ausgebildet. Es ist günstig, wenn bei der Bewegung die reflektierenden Oberflächen des zweiten und des dritten Spiegels ihre Ausrichtung zueinander beibehalten, d.h. wenn die Bewegung lediglich in einer Verschiebung, aber nicht in einer Drehung des zweiten und dritten Spiegels besteht. Die gemeinsame Verschieberichtung verläuft typischerweise parallel zur Laserstrahlachse des auf den zweiten Spiegel auftreffenden Laserstrahls, d.h. der zweite Spiegel wird entlang der Laserstrahlachse des auftreffenden Laserstrahls verschoben.

Bei einer weiteren Ausführungsform verlaufen die Laserstrahlachse des Laserstrahls zwischen dem ersten Spiegel und dem zweiten Spiegel und die Laserstrahlachse des Laserstrahls zwischen dem dritten Spiegel und dem vierten Spiegel parallel zueinander und bevorzugt parallel zur gemeinsamen Verschiebeachse. Durch die parallele Ausrichtung der Laserstrahlachse zwischen dem ersten und zweiten bzw. zwischen dem dritten und vierten Spiegel, die durch eine geeignete Wahl der Winkel erreicht werden kann, unter denen der Laserstrahl auf die jeweiligen Spiegel auftrifft, kann die mittels der Bewegungseinrichtung bewirkte Bewegung, insbesondere Verschiebung, des zweiten und dritten Spiegels relativ zum ersten und zum vierten Spiegel wesentlich vereinfacht werden.

Bei einer Ausführungsform ist die Bewegungseinrichtung zur Verschiebung des ersten und/oder des vierten Spiegels entlang einer weiteren Verschiebeachse ausgebildet, die bevorzugt parallel zur gemeinsamen Verschiebeachse verläuft. Sofern die Einstelleinrichtung zur Vergrößerung des Strahldurchmessers dienen soll, fällt der Laserstrahl typischerweise kollimiert auf den ersten Spiegel ein, so dass die Verschiebung des ersten Spiegels in der Regel keinen optischen Effekt hat. In diesem Fall ist die Bewegungseinrichtung typischerweise ausgebildet, lediglich den vierten Spiegel zu verschieben. Sofern die Einstelleinrichtung zur Verkleinerung des Strahldurchmessers dienen soll, fällt der Laserstrahl typischerweise kollimiert auf den vierten Spiegel ein. In diesem Fall ist die Bewegungseinrichtung typischerweise ausgebildet, lediglich den ersten Spiegel zu verschieben. Sofern die Einstelleinrichtung mit beiden Propagationsrichtungen des Laserstrahls betrieben werden soll, kann die Bewegungseinrichtung selbstverständlich ausgebildet sein, sowohl den ersten als auch den vierten Spiegel zu verschieben.

Die weitere Verschieberichtung verläuft typischerweise parallel zur Laserstrahlachse des auf den vierten (oder ggf. auf den ersten) Spiegel auftreffenden Laserstrahls und die weitere Verschiebeachse stimmt mit der Laserstrahlachse des auftreffenden Laserstrahls überein. Durch die Verschiebung des vierten (oder ggf. des ersten) Spiegels aus der Grundstellung heraus kann der Öffnungswinkel des Laserstrahls, d.h. die Divergenz bzw. die Konvergenz des Laserstrahls eingestellt werden (s.o.). Bei einer Verschiebung entlang einer solchen Verschiebeachse bleibt die Abbildung über einen erstaunlich großen Variationsbereich aberrationsarm, so dass sich die Konvergenz/Divergenz des Laserstrahls über einen verhältnismäßig großen Bereich (bis ca. 10-20 mrad) variieren lässt. Die Aberrationen, die bei der Beeinflussung der Strahlkonvergenz bzw. der Strahldivergenz bei Verwendung eines adaptiven Spiegels (d.h. eines Spiegels mit veränderlicher Krümmung) auftreten, sind typischerweise deutlich größer.

Für die Verschiebung entlang der weiteren Verschiebeachse wird der betreffende (erste bzw. vierte) Spiegel typischerweise linear beweglich an Führungen gelagert und mittels eines Aktuators, z.B. mittels eines Linearmotors, in Verschieberichtung verschoben. Die gemeinsame Verschiebung des zweiten und des dritten Spiegels kann auf analoge Weise erfolgen.

Bei einer weiteren Ausführungsform ist die zweite reflektierende Oberfläche des zweiten Spiegels in einem festen Abstand zu der dritten reflektierenden Oberfläche des dritten Spiegels angeordnet. Es hat sich als günstig herausgestellt, wenn der Abstand zwischen der zweiten reflektierenden Oberfläche und der dritten reflektierenden Oberfläche bei der Bewegung des zweiten und des dritten Spiegels mit Hilfe der Bewegungseinrichtung (bzw. insgesamt) konstant gehalten wird. Der Abstand zwischen den beiden Spiegeln kann beispielsweise mit Hilfe von Abstandshaltern oder dergleichen konstant gehalten werden.

Bei einer Weiterbildung sind der zweite und der dritte Spiegel in einem festen Abstand zueinander an einem gemeinsamen Träger angebracht und die Bewegungseinrichtung ist ausgebildet, zur gemeinsamen Bewegung des zweiten und des dritten Spiegels relativ zu dem ersten und dem vierten Spiegel den gemeinsamen Träger zu bewegen. In diesem Fall greift die Bewegungseinrichtung z.B. mittels eines Aktuators an dem gemeinsamen Träger an, um die beiden Spiegel gemeinsam zu bewegen, insbesondere um die beiden Spiegel gemeinsam zu verschieben. Der Träger kann linear beweglich an Führungen gelagert sein und mittels eines Aktuators, z.B. mittels eines Linearmotors, bewegt werden.

Bei einer Weiterbildung ist der gemeinsame Träger als gemeinsames Gehäuse ausgebildet, welches eine zweite Öffnung zum Eintritt des Laserstrahls von dem ersten Spiegel und eine dritte Öffnung zum Austritt des Laserstrahls zu dem vierten Spiegel aufweist. Es versteht sich, dass der Laserstrahl das Gehäuse auch in umgekehrter Propagationsrichtung durchlaufen kann. Typischerweise sind der zweite und dritte Spiegel an einander gegenüber liegenden Enden des Gehäuses angeordnet, welches als Zylinder beispielsweise mit quadratischer oder mit rechteckiger Grundfläche (d.h. als Quader) ausgebildet sein kann. Die zweite Öffnung und die dritte Öffnung sind in diesem Fall typischerweise entlang des Zylindermantels angeordnet und die Laserstrahlachse verläuft typischerweise annähernd entlang der Längsachse des gemeinsamen Gehäuses.

Wenn das gemeinsame Gehäuse entlang der gemeinsamen Verschieberichtung bewegt wird, die mit der Laserstrahlachse des auf den zweiten Spiegel einfallenden Laserstrahls übereinstimmt, verändert sich bei der Verschiebung die Position des Laserstrahls relativ zu dem gemeinsamen Gehäuse nicht, so dass dieser stets durch die zweite Öffnung in das gemeinsame Gehäuse eintritt und durch die dritte Öffnung aus dem gemeinsamen Gehäuse austritt. Durch die Anordnung des zweiten und des dritten Spiegels in einem gemeinsamen Gehäuse können die reflektierenden Oberflächen des zweiten und des dritten Spiegels vor Kontaminationen geschützt werden.

Bei einer weiteren Ausführungsform ist der erste Spiegel in einem Gehäuse angeordnet, welches eine erste Öffnung zum Austritt des Laserstrahls zu dem zweiten Spiegel aufweist und/oder der vierte Spiegel ist in einem weiteren Gehäuse angeordnet, welches eine vierte Öffnung zum Eintritt des Laserstrahls von dem dritten Spiegel aufweist. Die Unterbringung des ersten bzw. des vierten Spiegels in einem jeweiligen Gehäuse ermöglicht es, diese vor Kontaminationen zu schützen. Das Gehäuse bzw. das weitere Gehäuse können insbesondere als Zylinder, insbesondere als Quader, ausgebildet sein. Der erste bzw. der vierte Spiegel ist typischerweise an einer Stirnseite des Gehäuses bzw. des weiteren Gehäuses angebracht. Der Laserstrahl tritt typischerweise an der Stirnseite an der dem ersten Spiegel abgewandten Ende des Gehäuses in die Einstelleinrichtung ein und an der Stirnseite am dem vierten Spiegel abgewandten Ende des weiteren Gehäuses aus der Einstelleinrichtung aus, wobei die Laserstrahlachse in der Regel mit der Längsachse des Gehäuses bzw. des weiteren Gehäuses übereinstimmt.

Bei einer weiteren Ausführungsform ist die Bewegungseinrichtung ausgebildet, zur Bewegung der ersten und der vierten reflektierenden Oberfläche relativ zueinander das Gehäuse und das weitere Gehäuse relativ zueinander zu bewegen. Beispielsweise kann die Bewegungseinrichtung an dem Gehäuse und/oder an dem weiteren Gehäuse mittels eines Aktuators angreifen, um eine Bewegung bzw. eine Verschiebung des Gehäuses bzw. des weiteren Gehäuses zu bewirken.

Bei einer weiteren Ausführungsform ist die Einstelleinrichtung ausgebildet, an dem ersten Spiegel und an dem zweiten Spiegel eine Z-Faltung des Laserstrahls zu erzeugen. Bei der Z-Faltung eines Laserstrahls an zwei Spiegeln verläuft die Laserstrahlachse des auf den ersten Spiegel einfallenden Laserstrahls im Wesentlichen parallel zur Laserstrahlachse des an dem zweiten Spiegel reflektierten, ausfallenden Laserstrahls. Die Verwendung einer Z-Faltung des Laserstrahls ermöglicht eine kompakte Realisierung der Einstelleinrichtung.

Bei einer Ausführungsform ist die Einstelleinrichtung ausgebildet, an dem dritten Spiegel und an dem vierten Spiegel eine weitere Z-Faltung des Laserstrahls zu erzeugen. Die Verwendung von zwei Z-Faltungen des Laserstrahls ermöglicht eine besonders kompakte Realisierung der Einstelleinrichtung. Insbesondere können die Z-Faltung und die weitere Z-Faltung so hintereinander geschaltet werden, dass die Laserstrahlachse des auf den ersten Spiegel einfallenden, in die Einstelleinrichtung eintretenden Laserstrahls parallel zur Laserstrahlachse des an dem vierten Spiegel reflektierten, aus der Einstelleinrichtung austretenden Laserstrahls verläuft. Auch können die beiden Z-Faltungen bzw. die Winkel, unter denen der Laserstrahl auf die jeweiligen Spiegel auftrifft, derart aufeinander abgestimmt sein, dass die Laserstrahlachse des Laserstrahls zwischen dem ersten Spiegel und dem zweiten Spiegel parallel zur Laserstrahlachse zwischen dem dritten Spiegel und dem vierten Spiegel verläuft, und zwar unabhängig von der jeweiligen Stellung bzw. Position der Bewegungseinrichtung (s.o.), wodurch die Bewegung, genauer gesagt die Verschiebung, des zweiten und dritten Spiegels relativ zum ersten und vierten Spiegel erheblich vereinfacht werden kann.

Bei einer Ausführungsform ist die Strahlführungseinrichtung zur Führung eines $CO_2$-Laserstrahls ausgebildet. Für die Führung eines $CO_2$-Laserstrahls, d.h. eines Laserstrahls mit einer Wellenlänge um ca. 10,6 $\mu$m, werden bevorzugt reflektierende optische Elemente verwendet. Diese bestehen typischerweise zumindest im Bereich ihrer Oberflächen aus metallischen Materialien, z.B. aus Kupfer, auf die eine hoch reflektierende Beschichtung aufgebracht werden kann. Auch transmittierende optische Elemente können zur Strahlführung von $CO_2$-Laserstrahlung verwendet werden. Es existiert allerdings nur eine kleine Anzahl von Materialien, welche für $CO_2$-Laserstrahlung transparent sind. Ein solches Material ist Zinkselenid, welches u.a. auch für die Linsenherstellung verwendet werden kann.

Im Strahlweg nach der Einstelleinrichtung kann in der Strahlführungseinrichtung mindestens ein verkippbarer und/oder verschiebbarer Umlenkspiegel zur Kompensation eines Strahlversatzes bei der Bewegung, insbesondere bei der Verschiebung des vierten Spiegels angeordnet sein. Zur Kompensation des Strahlversatzes können insbesondere zwei verkippbare bzw. verschiebbare Umlenkspiegel verwendet werden, die unter solchen Winkeln bzw. um solche Wegstrecken zueinander verkippt bzw. verschoben werden, dass der durch die Verschiebung bedingte Strahlversatz des Laserstrahls kompensiert werden kann.

Der (mindestens eine) Umlenkspiegel kann mit dem vierten Spiegel zur gemeinsamen Verschiebung bewegungsgekoppelt sein. Durch die Bewegungskopplung kann für die gemeinsame Bewegung des vierten Spiegels und des Umlenkspiegels ein gemeinsamer Antrieb der Bewegungseinrichtung genutzt werden, so dass auf eine zusätzliche Steuerung zur Koordination bzw. zur Synchronisation der Verschiebebewegung des vierten Spiegels mit der Bewegung des Umlenkspiegels verzichtet werden kann. Die Verschiebebewegung des Umlenkspiegels muss nicht zwingend entlang der gemeinsamen Verschieberichtung bzw. der weiteren Verschieberichtung erfolgen, d.h. die Bewegungskopplung kann so ausgelegt werden, dass der Umlenkspiegel in eine von der Verschieberichtung bzw. der weiteren Verschieberichtung abweichende Richtung verschoben wird. Dies kann z.B. durch eine zwangsgekoppelte Bewegung des vierten Spiegels mit Hilfe einer geeigneten (Zwangs-)Führung erreicht werden.

Ein weiterer Aspekt der Erfindung betrifft eine EUV-Strahlungserzeugungsvorrichtung, umfassend: eine Strahlerzeugungseinrichtung zur Erzeugung eines Laserstrahls, eine Vakuum-Kammer, in der zur Erzeugung von EUV-Strahlung ein Target-Material in einem Zielbereich einbringbar ist, sowie eine Strahlführungseinrichtung wie weiter oben beschrieben zur Führung des Laserstrahls von der Strahlerzeugungseinrichtung in Richtung auf den Zielbereich. Durch die Strahlführungseinrichtung, genauer gesagt durch die Einstelleinrichtung, können sowohl der Strahldurchmesser des Laserstrahls als auch der Öffnungswinkel des Laserstrahls über einen vergleichsweise großen Wertebereich eingestellt werden. Beispielsweise kann ausgehend von einer nominellen Vergrößerung des Strahldurchmessers um einen Faktor von beispielsweise 2,0 der Maßstab der Vergrößerung des Strahldurchmessers in einem Wertebereich beispielsweise zwischen ca. 1,6 und 2,4 eingestellt werden. Auch der Öffnungswinkel des Laserstrahls bzw. die Konvergenz/Divergenz des Laserstrahls kann über einen verhältnismäßig großen Bereich von beispielsweise ca. 10-20 mrad oder mehr eingestellt werden.

Ein weiterer Aspekt der Erfindung betrifft ein Verfahren zum Einstellen eines Strahldurchmessers und eines Öffnungswinkels eines Laserstrahls mittels einer Strahlführungseinrichtung wie weiter oben beschrieben, umfassend: Bewegen der ersten und der vierten reflektierenden Oberfläche relativ zueinander, sowie gemeinsames Bewegen der zweiten und dritten reflektierenden Oberfläche relativ zu der ersten und der vierten reflektierenden Oberfläche, bis der vorgegebene Strahldurchmesser und der vorgegebene Öffnungswinkel erreicht sind.

Wie weiter oben beschrieben wurde, führt die Veränderung des Abstandes zwischen der ersten und vierten reflektierenden Oberfläche zu einer Änderung des Öffnungswinkels des Laserstrahls, wobei sich als parasitärer Effekt auch eine Änderung des Strahldurchmessers einstellt. Bei der relativen Bewegung der zweiten und dritten reflektierenden Oberfläche relativ zu der ersten und vierten reflektierenden Oberfläche zur Einstellung des Strahldurchmessers kann sich ebenfalls als parasitärer Effekt eine Veränderung des Öffnungswinkels ergeben. Sowohl die als parasitärer Effekt auftretende Änderung des Strahldurchmessers als auch die als parasitärer Effekt auftretende Änderung des Öffnungswinkels können kompensiert werden, indem eine geeignete Relativbewegung der ersten und vierten reflektierenden Oberfläche zueinander bzw. der zweiten und dritten reflektierenden Oberfläche relativ zu der ersten und vierten reflektierenden Oberfläche erfolgt, d.h. beide parasitäre Effekte können erforderlichenfalls kompensiert werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1    eine schematische Darstellung einer EUV-Strahlerzeugungsvorrichtung, welche eine Strahlführungseinrichtung mit einer Einstelleinrichtung mit vier Spiegeln zur Einstellung eines Strahldurchmessers und eines Öffnungswinkels eines Laserstrahls aufweist,

Fig. 2a,b    eine schematische Darstellung einer Bewegungseinrichtung für die Einstelleinrichtung von Fig. 1 in einer Grundstellung, in der diese eine nominelle Vergrößerung des Strahldurchmessers erzeugt, sowie des Strahlengangs der Einstelleinrichtung in der Grundstellung der Bewegungseinrichtung,

Fig. 3a,b    eine schematische Darstellung analog Fig. 2a,b in einer Stellung der Bewegungseinrichtung, in welcher diese eine minimale Vergrößerung des Strahldurchmessers erzeugt,

Fig. 4a,b    eine schematische Darstellung analog Fig. 2a,b in einer Stellung der Bewegungseinrichtung, in welcher diese eine maximale Vergrößerung des Strahldurchmessers erzeugt,

Fig. 5a,b    eine schematische Darstellung analog Fig. 2a,b in einer Stellung der Bewegungseinrichtung, in welcher diese einen Laserstrahl mit einer maximal möglichen Strahldivergenz erzeugt, sowie

Fig. 6a-c schematische Darstellungen analog Fig. 2b, bei welcher die Einstelleinrichtung ausgebildet ist, einen, zwei oder drei Zwischenfoki zu erzeugen.

In der folgenden Beschreibung der Zeichnungen werden für gleiche bzw. funktionsgleiche Bauteile identische Bezugszeichen verwendet.

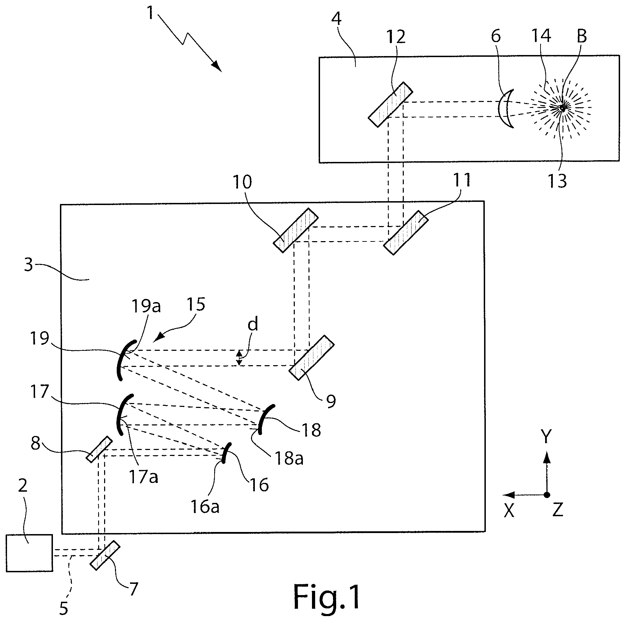

**Fig. 1** zeigt eine EUV-Strahlungserzeugungsvorrichtung 1, welche eine Treiberlasereinrichtung 2, eine Strahlführungseinrichtung 3 (Strahlführungs-Kammer) sowie eine Vakuum-Kammer 4 aufweist. In einer in der Vakuum-Kammer 4 gebildeten Vakuum-Umgebung ist eine Fokussiereinrichtung in Form einer Fokussierlinse 6 angeordnet, um einen $CO_2$-Laserstrahl 5 in einem Zielbereich B zu fokussieren. Die in Fig. 1 gezeigte EUV-Strahlungserzeugungsvorrichtung 1 entspricht im Wesentlichen dem Aufbau, wie er in der US 2011/0140008 A1 beschrieben ist, die durch Bezugnahme zum Inhalt dieser Anmeldung gemacht wird. Auf die Darstellung von Messeinrichtungen zur Überwachung des Strahlengangs des Laserstrahls 5 wurde aus Gründen der Übersichtlichkeit verzichtet. Alternativ oder zusätzlich zu einer Fokussierlinse 6 kann die Fokussiereinrichtung mindestens ein reflektierendes optisches Element aufweisen.

Die Treiberlasereinrichtung 2 umfasst eine $CO_2$-Strahlquelle sowie mehrere Verstärker zur Erzeugung eines Laserstrahls 5 mit hoher Strahlungsleistung (> 1 kW). Für eine detaillierte Beschreibung von Beispielen für mögliche Ausgestaltungen der Treiberlasereinrichtung 2 sei auf die US 2011/0140008 A1 verwiesen. Von der Treiberlasereinrichtung 2 wird der Laserstrahl 5 über einer Mehrzahl von Umlenkspiegeln 7 bis 11 der Strahlführungs-Kammer 3 sowie eines weiteren Umlenkspiegels 12 in der Vakuum-Kammer 4 auf die Fokussierlinse 6 umgelenkt, welche den Laserstrahl 5 in dem Zielbereich B fokussiert, an dem Zinn als Target-Material 13 angeordnet ist. An Stelle der Fokussierlinse 6 können auch einer oder mehrere Spiegel für die Fokussierung des $CO_2$-Laserstrahls in den Zielbereich B verwendet werden. Es versteht sich, dass auch andere Materialien als Zinn als Target-Material 13 verwendet werden können.

Das Target-Material 13 wird von dem fokussierten Laserstrahl 5 getroffen und hierbei in einen Plasma-Zustand übergeführt, der zur Erzeugung von EUV-Strahlung 14 dient. Das Target-Material 13 wird dem Zielbereich B mit Hilfe einer (nicht gezeigten) Bereitstellungseinrichtung zugeführt, welche das Target-Material 13 entlang eines vorgegebenen Pfades führt, der den Zielbereich B kreuzt. Für Details der Bereitstellung des Ziel-Materials sei ebenfalls auf die US 2011/0140008 A1 verwiesen.

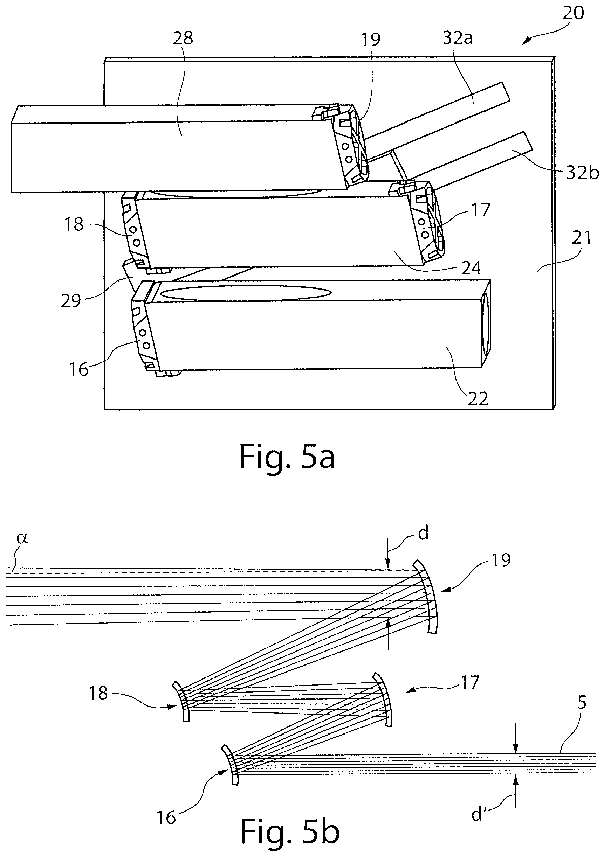

In einem Strahlführungs-Raum der Strahlführungs-Kammer 3 ist eine Einstelleinrichtung 15 angeordnet, die zur Einstellung eines Strahldurchmessers d des Laserstrahls 5 und eines Öffnungswinkels $\alpha$ (vgl. **Fig. 5b**) des Laserstrahls 5 dient. Die Einstelleinrichtung 15 umfasst einen ersten Spiegel 16, der eine erste, konvex gekrümmte reflektierende Oberfläche 16a aufweist. Der auf den ersten Spiegel 16 kollimiert einfallende Laserstrahl 5 wird von der ersten reflektierenden Oberfläche 16a als divergenter Laserstrahl 5 reflektiert und trifft auf einen zweiten Spiegel 17, der eine zweite, konkav gekrümmte reflektierende Oberfläche 17a aufweist. Der Laserstrahl 5 verlässt den zweiten Spiegel 17 als konvergenter Laserstrahl 5 und trifft auf einen dritten Spiegel 18, der eine dritte, konvex gekrümmte reflektierende Oberfläche 18a aufweist. Von dem dritten Spiegel 18 wird der Laserstrahl 5 als divergenter Laserstrahl 5 reflektiert und trifft auf einen vierten Spiegel 19, der eine vierte, konkav gekrümmte reflektierende Oberfläche 19a aufweist. Die Krümmungsradien der vier reflektierenden Oberflächen 16a-19a der vier Spiegel 16-19 sind derart aufeinander abgestimmt, dass der Laserstrahl 5 in der weiter oben beschriebenen Weise reflektiert wird, d.h. dass der Laserstrahl 5 zwischen dem ersten Spiegel 16 und dem zweiten Spiegel 17 divergent ist, zwischen dem zweiten Spiegel 17 und dem dritten Spiegel 18 konvergent ist und zwischen dem dritten Spiegel 18 und dem vierten Spiegel 19 divergent ist.

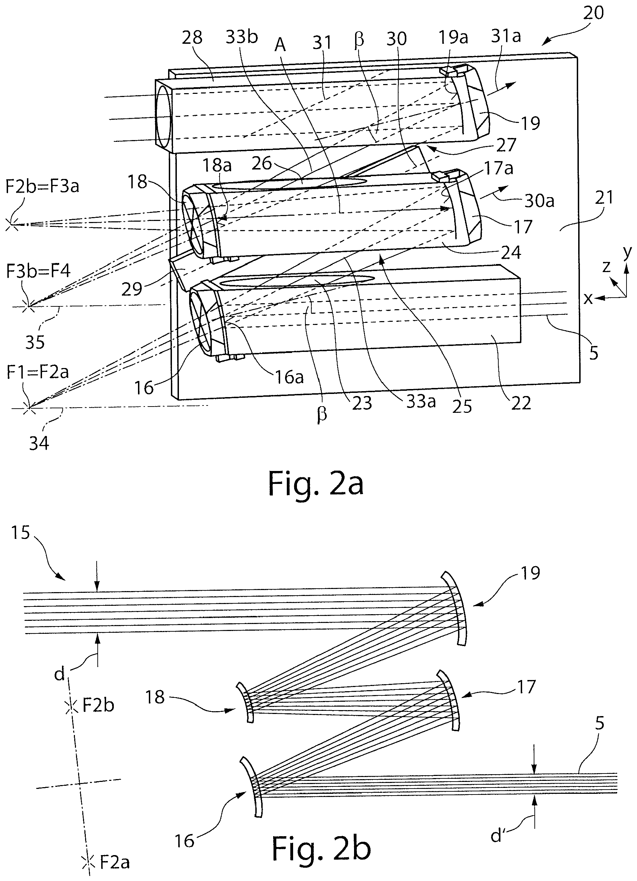

Im gezeigten Beispiel sind der erste Spiegel 16 und der vierte Spiegel 19 als Off-Axis Parabolspiegel ausgebildet, d.h. die erste und vierte reflektierende Oberfläche 16a, 19a bilden jeweils ein Off-Axis Segment eines (elliptischen) Paraboloids. Der Begriff "Off-Axis" bedeutet, dass die reflektierenden Oberflächen 16a, 19a nicht die Rotationsachse des Paraboloids (und damit auch nicht den Scheitelpunkt des Paraboloids) enthalten. Der zweite Spiegel 17 und der dritte Spiegel 18 sind als Ellipsoidspiegel ausgebildet, d.h. die reflektierenden Oberflächen 17a, 18a bilden jeweils ein Segment eines Ellipsoids. Grundsätzlich können die reflektierenden Oberflächen 17a, 18a symmetrische Segmente eines Ellipsoids bilden, so dass ein jeweiliges Segment des Ellipsoids für den einfallenden und für den ausfallenden Laserstrahl zwei gleiche Brennweiten bzw. Schnittweiten aufweist. Bei dem nachfolgend in **Fig. 2a,b** gezeigten Beispiel handelt es sich bei dem zweiten Spiegel 17 um einen nicht symmetrischen Ellipsoidspiegel (auch Off-Axis-Ellipsoidspiegel genannt), bei dem die reflektierende Oberfläche 17a ein Segment eines Ellipsoids bildet, welches nicht drehsymmetrisch zu einer der in Fig. 2b angedeuteten Hauptachsen des Ellipsoids verläuft, von dem die reflektierende Oberfläche 17a einen Teilbereich bildet. Entsprechendes gilt auch für die reflektierende Oberfläche 18a des dritten Spiegels 18. Der zweite und der dritte Spiegel 17, 18 weisen für den einfallenden und für den ausfallenden Laserstrahl 5 jeweils eine unterschiedliche Schnitt- bzw. Brennweite auf. Die Verwendung des zweiten und dritten Spiegels 17, 18 in Form von Off-Axis-Ellipsoidspiegeln ermöglicht mehr Freiheitsgrade bezüglich des Designs und der Abstände der vier Spiegel 16 bis 19 als dies bei symmetrischen Ellipsoidspiegeln der Fall ist.

Zur Einstellung des Strahldurchmessers d und des Öffnungswinkels α des Laserstrahls 5 weist die Einstelleinrichtung 15 eine Bewegungseinrichtung 20 auf, die nachfolgend anhand von Fig. 2a näher beschrieben wird. Die Bewegungseinrichtung 20 weist im gezeigten Beispiel einen Grundkörper in Form einer Trägerplatte 21 auf, an der ein (erstes) Gehäuse 22 starr, z.B. über eine Schraubverbindung, befestigt ist. Das Gehäuse 22 ist in Form eines Zylinders mit einer rechteckigen Grundfläche (d.h. in Form eines Quaders) ausgebildet und weist an einem Ende eine (nicht gezeigte) Eintrittsöffnung auf, durch die der kollimierte Laserstrahl 5, der entlang einer Strahlachse (X-Achse eines XYZ-Koordinatensystems) propagiert, in das Gehäuse 22 eintritt. Am anderen Ende des Gehäuses 22 ist der erste Spiegel 16 angebracht, an dessen reflektierender Oberfläche 16a der Laserstrahl 5 durch eine erste Öffnung 23 in Richtung auf den zweiten Spiegel 17 austritt, der zusammen mit dem dritten Spiegel 18 in einem gemeinsamen, quaderförmigen Gehäuse 24 angeordnet ist. Der zweite und der dritte Spiegel 17, 18 sind an einander gegenüber liegenden Enden des gemeinsamen Gehäuses 24, welches ebenfalls quaderförmig ausgebildet ist, in einem festen Abstand A voneinander angeordnet.

Der divergente Laserstrahl 5 tritt an einer zweiten Öffnung 25 (in Fig. 2a verdeckt) in das gemeinsame Gehäuse 24 ein, wird von dem zweiten Spiegel 17 zu dem dritten Spiegel 18 reflektiert und verlässt das gemeinsame Gehäuse 24 über eine dritte Öffnung 26. Der aus dem gemeinsamen Gehäuse 24 austretende Laserstrahl 5 tritt durch eine vierte Öffnung 27 (in Fig. 2a verdeckt) in ein weiteres Gehäuse 28 ein, in dem der vierte Spiegel 19 angeordnet ist. Das weitere Gehäuse 28 ist ebenfalls quaderförmig ausgebildet und der vierte Spiegel 19 ist an einem Ende des quaderförmigen Gehäuses 28 angebracht. Am gegenüberliegenden Ende des weiteren Gehäuses 28 tritt der Laserstrahl 5 an einer Austrittsöffnung aus dem weiteren Gehäuse 28 und damit aus der Einstelleinrichtung 15 aus.

Bei dem in Fig. 2a,b gezeigten Beispiel erzeugen der erste Spiegel 16 und der zweite Spiegel 17 eine Z-Faltung des entlang der X-Richtung in die Einstelleinrichtung 15 einfallenden Laserstrahls 5, d.h. der an dem zweiten Spiegel 17 reflektierte Laserstrahl 5 weist im Wesentlichen dieselbe Propagationsrichtung wie der einfallende Laserstrahl 5 auf, d.h. dieser verläuft im Wesentlichen zu dem einfallenden Laserstrahl 5 parallel versetzt. Entsprechend erzeugen der dritte Spiegel 18 und der vierte Spiegel 19 der Einstelleinrichtung 15 eine weitere Z-Faltung, d.h. der auf den dritten Spiegel 18 auftreffende Laserstrahl 5 wird von dem dritten und vierten Spiegel 18, 19 so reflektiert, dass dieser im Wesentlichen parallel zu dem auf den dritten Spiegel 18 auftreffenden Laserstrahl 5 verläuft. Die Z-Faltung an dem ersten und zweiten Spiegel 16, 17 und die weitere Z-Faltung an dem dritten und vierten Spiegel 18, 19 sind derart aufeinander abgestimmt, dass der in die Einstelleinrichtung 15 einfallende Laserstrahl 5 und der aus der Einstelleinrichtung 15 austretende Laserstrahl 5 parallel zueinander verlaufen, d.h. im gezeigten Beispiel in X-Richtung propagieren. Die Z-Faltung an dem ersten und zweiten Spiegel 16, 17 sowie die weitere Z-Faltung an dem dritten und vierten Spiegel 18, 19 sind derart aufeinander abgestimmt, dass die Laserstrahlachse 33a des Laserstrahls 5 zwischen dem ersten Spiegel 16 und dem zweiten Spiegel 17 sowie die Laserstrahlachse 33b zwischen dem dritten Spiegel 18 und dem vierten Spiegel 19 übereinstimmen. Wenn wie im gezeigten Beispiel der in die Einstelleinrichtung 15 einfallende Laserstrahl 5 und der aus der Einstelleinrichtung 15 austretende Laserstrahl 5 parallel zueinander verlaufen, stimmt in diesem Fall typischer Weise ein Einfallswinkel β des Laserstrahls 5 auf den ersten Spiegel 16 mit einem Einfallswinkel β des Laserstrahls 5 auf den vierten Spiegel 19 überein. Durch die parallele Ausrichtung der jeweiligen Laserstrahlachsen 33a, 33b des Laserstrahls 5 kann das Gehäuse 24 mit dem zweiten und dritten Spiegel 17, 18 verschoben werden, ohne dass hierbei ein Strahlversatz auftritt. Ohne eine solche parallele Ausrichtung wäre ggf. eine separate Ansteuerung aller vier Spiegel 16 bis 19 erforderlich, um einen ggf. auftretenden Strahlversatz zu kompensieren.

Bei dem in Fig. 2a,b gezeigten Beispiel sind sowohl das gemeinsame Gehäuse 24 als auch das weitere Gehäuse 28 an der Trägerplatte 21 beweglich, genauer gesagt verschiebbar gelagert. Die Bewegungseinrichtung 20 ist ausgebildet, das gemeinsame Gehäuse 24 und das weitere Gehäuse 28 unabhängig voneinander zu bewegen, genauer gesagt zu verschieben. Zu diesem Zweck ist an der Außenseite des gemeinsamen Gehäuses 24 eine Führungsplatte 29 befestigt, die entlang einer gemeinsamen Verschieberichtung 30 verschoben werden kann, welche der Längsrichtung der Führungsplatte 29 entspricht. Die Führungsplatte 29 ist derart (im gezeigten Beispiel im Wesentlichen mittig) an dem gemeinsamen Gehäuse 24 befestigt, dass bei der Verschiebung entlang der gemeinsamen Verschieberichtung 30 an der Position, an welcher der Laserstrahl 5 auf den zweiten Spiegel 17 auftrifft, die Verschieberichtung 30 eine Verschiebeachse 30a bildet, die mit der Laserstrahlachse des auf die zweite reflektierende Oberfläche 17a des zweiten Spiegels 17 auftreffenden Laserstrahls 5 übereinstimmt.

Entsprechend ist auch der vierte Spiegel 19 an einer (in Fig. 2a nicht gezeigten) weiteren Führungsplatte befestigt, um das weitere Gehäuse 28 entlang einer weiteren Verschieberichtung 31 zu verschieben, die im gezeigten Beispiel parallel zur gemeinsamen Verschieberichtung 30 verläuft. Die weitere Führungsplatte ist derart (im gezeigten Beispiel im Wesentlichen mittig) an dem weiteren Gehäuse 28 befestigt, dass die weitere Verschieberichtung 31 an der Position, an welcher der Laserstrahl 5 auf den vierten Spiegel 19 auftrifft, die weitere Verschieberichtung 31 eine weitere Verschiebeachse 31a bildet, die mit der Laserstrahlachse des auf die vierte reflektierende Oberfläche 19a des vierten Spiegels 19 auftreffenden Laserstrahls 5 übereinstimmt.

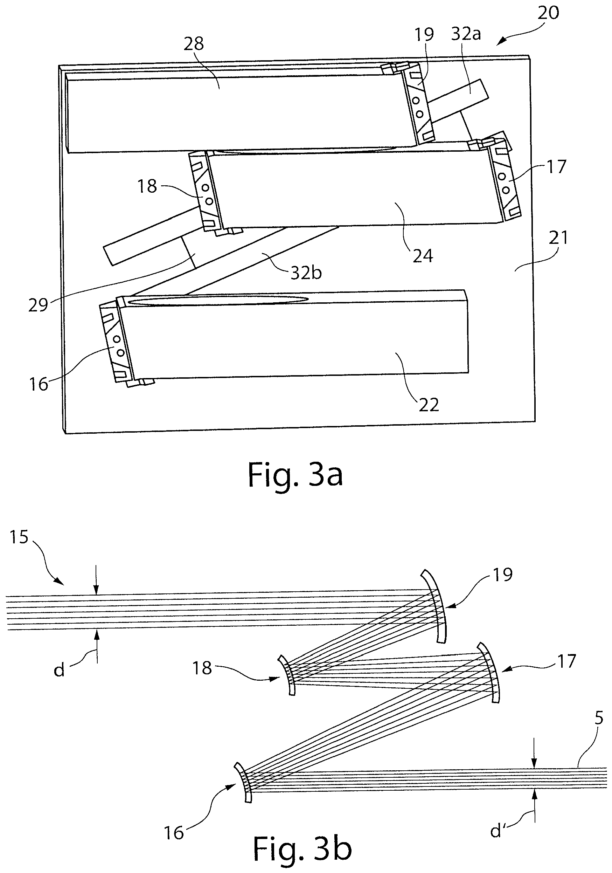

Die Führungsplatte 29 ist linear beweglich zwischen zwei an der Trägerplatte 21 gebildeten Linearführungen 32a, 32b gelagert, die in **Fig. 3a** bis **Fig. 5a** dargestellt sind. Entsprechendes gilt für die weitere Führungsplatte, auf deren Darstellung ebenso wie auf die Darstellung von weiteren Linearführungen in Fig. 2a bis Fig. 5a aus Gründen der Übersichtlichkeit verzichtet wurde. Die Führungsplatte 29 kann mittels eines nicht gezeigten Aktuators, beispielsweise eines Linearmotors, zwischen den beiden Linearführungen 32a, 32b entlang der gemeinsamen Verschieberichtung 30 verschoben werden. Auch das weitere Gehäuse 28 kann mittels eines weiteren Aktuators, beispielsweise eines weiteren Linearmotors, zwischen den beiden weiteren Linearführungen entlang der weiteren Verschieberichtung 31 verschoben werden.

Die Bewegungseinrichtung 20 ist ausgebildet, den Aktuator und den weiteren Aktuator unabhängig voneinander anzusteuern, so dass das gemeinsame Gehäuse 24 und das weitere Gehäuse 28 unabhängig voneinander entlang der gemeinsamen Verschiebeachse 30a bzw. entlang der weiteren Verschiebeachse 31a verschoben werden können. Bei der Bewegung des gemeinsamen Gehäuses 24 werden der zweite Spiegel 17 und der dritte Spiegel 18 gemeinsam relativ zu dem ersten Spiegel 16 und dem vierten Spiegel 19 verschoben. Bei der Bewegung des weiteren Gehäuses 28 wird der vierte Spiegel 19 relativ zum ersten, ortsfesten Spiegel 16 verschoben.

Fig. 2a zeigt die Bewegungseinrichtung 20 in einer Grundstellung, in welcher eine Fokusposition F1 des ersten als Paraboloid ausgebildeten Spiegels 16 und eine erste Fokusposition F2a des zweiten, als Ellipsoid ausgebildeten Spiegels 17 übereinstimmen. Unabhängig von der jeweiligen Stellung der Einstelleinrichtung 15 stimmt eine zweite Fokusposition F2b des zweiten Spiegels 17 mit einer ersten Fokusposition F3a des dritten, ebenfalls als Ellipsoid ausgebildeten Spiegels 18 überein, da beide in konstantem Abstand voneinander angeordnet sind. Weiterhin stimmt in der Grundstellung eine zweite Fokusposition F3b des dritten Spiegels 18 mit einer Fokusposition F4 des vierten, als Paraboloid ausgebildeten Spiegels 19 überein. Die Symmetrieachse 34 (Rotationsachse) des ersten (Parabol-)Spiegels 16, auf der sich dessen Fokusposition F1 befindet, sowie die Symmetrieachse 35 des vierten (Parabol-)Spiegels 19, auf der sich dessen Fokusposition F4 befindet, sind parallel zueinander ausgerichtet.

**Fig. 2b** zeigt den Strahlverlauf des Laserstrahls 5 durch die Einstelleinrichtung 15 bei der in Fig. 2a gezeigten Grundstellung der Bewegungseinrichtung 20. Der kollimiert in die Einstelleinrichtung 15 einfallende Laserstrahl 5 tritt in der Grundstellung kollimiert aus der Einstelleinrichtung 15 aus, wobei der Strahldurchmesser d des austretenden Laserstrahls 5 relativ zum Strahldurchmesser d' des in die Einstelleinrichtung 15 eintretenden Laserstrahls 5 um einen Faktor M größer ist, d.h. die durch die Einstelleinrichtung 15 nominell bewirkte Vergrößerung liegt bei $d/d' = M$.

Der (Vergrößerungs-)Faktor M der Einstelleinrichtung 15 ergibt sich bei der Verwendung von Off-Axis-Ellipsoidspiegeln 16, 17 als das Produkt aus dem (Vergrößerungs-)Faktor $M_{12} = - f_{2a}/f_1$ der Abbildung durch den ersten und zweiten Spiegel 16, 17, dem (Vergrößerungs-)Faktor $M_{23} = - f_{3a} / f_{2b}$ der Abbildung durch den zweiten und dritten Spiegel 17, 18, sowie durch den (Vergrößerungs-)Faktor $M_{34} = - f_4/f_{3b}$ der Abbildung durch den dritten und vierten Spiegel 18, 19, d.h. es gilt:

$$M = - f_4 / f_1 \times f_{2a} / f_{2b} \times f_{3a} / f_{3b},$$

wobei $f_1$, $f_{2a}$, $f_{2b}$, $f_{3a}$, $f_{3b}$, $f_4$ die Brennweite, d.h. den Abstand zwischen dem jeweiligen Spiegel 16 bis 19 bzw. der jeweiligen reflektierenden Oberfläche 16a bis 19a und der jeweiligen Fokusposition F1, F2a, F2b, F3a, F3b, F4 bezeichnet. Für den Abstand $d_{12}$ zwischen dem ersten Spiegel 16 und dem zweiten Spiegel 17 gilt in der Grundstellung: $d_{12} = f_1 + f_{2a}$, für den Abstand $d_{23}$ (bzw. A) zwischen dem zweiten Spiegel 17 und dem dritten Spiegel 18 gilt $d_{23} = f_{2b} + f_{3a}$ und für den Abstand $d_{23}$ zwischen dem dritten Spiegel 17 und dem vierten Spiegel 18 gilt $d_{34} = f_{3b} + f_4$. Die Brennweiten $f_1$, $f_{2a}$, $f_{2b}$, $f_{3a}$, $f_{3b}$, $f_4$ des ersten bis vierten Spiegels 16 bis 19 sind vom zur Verfügung stehenden Bauraum abhängig und können beispielsweise in der Größenordnung zwischen ca. 500 mm und ca. 1000 mm liegen.

Sofern der zweite und der dritte Spiegel 17, 18 als symmetrische Ellipsoidspiegel ausgebildet sind, vereinfacht sich der (Vergrößerungs-)Faktor wie folgt: $M = - f_4/f_1$. Für den Abstand $d_{12}$ zwischen dem ersten und dem zweiten Spiegel 16, 17, den Abstand $d_{23}$ (bzw. A) zwischen dem zweiten und dem dritten Spiegel 17, 18 sowie für den Abstand $d_{34}$ zwischen dem dritten und dem vierten Spiegel 18, 19 gilt in diesem Fall: $d_{12} = f_1 + f_2$, $d_{23} = f_2 + f_3$ und $d_{34} = f_3 + f_4$. Wie weiter oben beschrieben wurde, weisen symmetrische Ellipsoidspiegel gleiche Brennweiten auf, d.h. es gilt in diesem Fall: $f_{2a} = f_{2b} = f_2$ bzw. $f_{3a} = f_{3b} = f_3$.

In der Grundstellung sind der zweite Spiegel 17 und der dritte Spiegel 18 so angeordnet, dass die Abbildung des einfallenden Laserstrahls 5 durch die Einstelleinrichtung 15 praktisch ohne Aberrationen erfolgt, da jeweils zwei der Fokuspositionen F1, F2a; F2b, F3a, F3b, F4 zusammenfallen. Bei dem in Fig. 2b gezeigten Beispiel weist der einfallende Laserstrahl 5 einen Strahldurchmesser d' von ca. 40 mm auf.

Fig. 3a,b zeigen die Bewegungseinrichtung 20 sowie den Strahlverlauf durch die Einstelleinrichtung 15 in einer oberen Stellung des gemeinsamen Gehäuses 24, in der das weitere Gehäuse 28 geringfügig aus der in Fig. 2a gezeigten Grundstellung heraus verschoben ist, um eine parasitäre Divergenzänderung des Laserstrahls 5 zu kompensieren, so dass der austretende Laserstrahl 5 weiterhin kollimiert bleibt. Das gemeinsame Gehäuse 24 ist in Fig. 3a,b in eine obere Stellung verschoben, in der dieses an das weitere Gehäuse 28 angrenzt. Bei der in Fig. 3a gezeigten oberen Stellung ist das weitere Gehäuse 28 somit in einem maximal möglichen Abstand von dem ersten Spiegel 16 bzw. von dem Gehäuse 22 angeordnet. In der in Fig. 3a,b gezeigten oberen Stellung erzeugt die Einstelleinrichtung 15 einen austretenden, kollimierten Laserstrahl 5 mit einem minimal möglichen Strahldurchmesser d, dessen Größe abhängig von den möglichen Verfahrwegen der Bewegungseinrichtung 20 sowie den verwendeten Brennweiten ist und der beispielsweise bei ca. 80 % des in der Grundstellung erzeugten Vergrößerungs-Faktors M liegen kann.

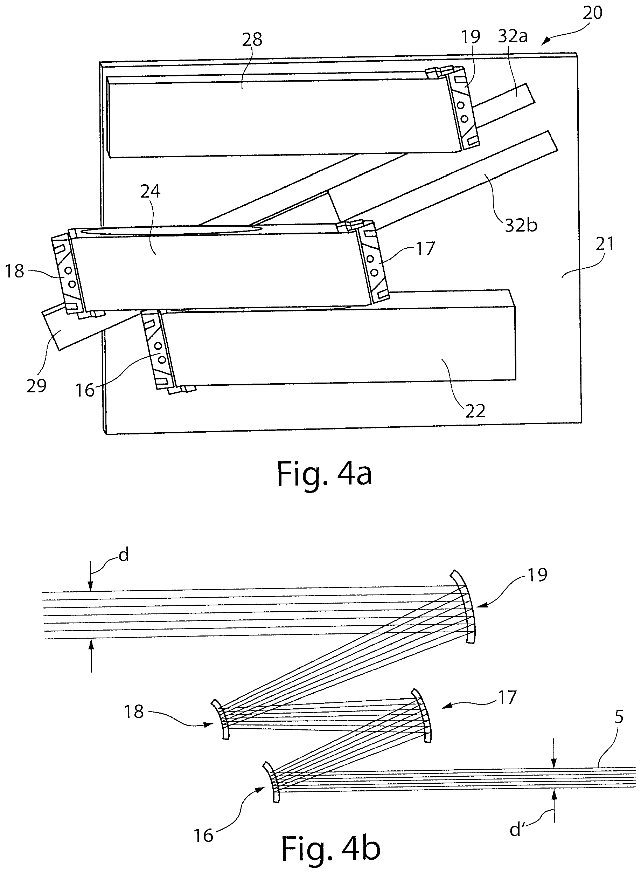

Fig. 4a,b zeigen die Bewegungseinrichtung 20 bzw. den Strahlverlauf durch die Einstelleinrichtung 15 in einer unteren Stellung des gemeinsamen Gehäuses 24, in der das weitere Gehäuse 28 ebenfalls geringfügig gegenüber der in der in Fig. 2a gezeigten Grundstellung verschoben ist, um eine parasitäre Divergenzänderung des Laserstrahls 5 zu kompensieren und einen kollimierten austretenden Laserstrahl 5 zu erzeugen. Das gemeinsame Gehäuse 24 ist in Fig. 4a,b in eine untere Stellung verschoben, in der dieses an das ortsfeste Gehäuse 22 angrenzt, in dem der erste Spiegel 16 angeordnet ist. Bei der in Fig. 4a gezeigten unteren Stellung ist das weitere Gehäuse 28 somit in einem minimal möglichen Abstand von dem ersten Spiegel 16 bzw. von dem Gehäuse 22 angeordnet. In der in Fig. 4a,b gezeigten unteren Stellung erzeugt die Einstelleinrichtung 15 einen austretenden, kollimierten Laserstrahl 5 mit einem maximal möglichen Strahldurchmesser d, dessen Größe abhängig von den möglichen Verfahrwegen der Bewegungseinrichtung 20 sowie den verwendeten Brennweiten ist und der beispielsweise bei ca. 120 % des in der Grundstellung erzeugten Vergrößerungs-Faktors M liegen kann.

Fig. 5a,b zeigen die Bewegungseinrichtung 20 und den Strahlverlauf durch die Einstelleinrichtung 15 schließlich in einer Stellung, in der das gemeinsame Gehäuse 24 wie in der in Fig. 2a gezeigten Grundstellung positioniert ist. Bei der in Fig. 5a,b gezeigten Stellung ist das weitere Gehäuse 28 entlang der weiteren Verschiebeachse 31a in eine untere Stellung verschoben, in der das weitere Gehäuse 28 an das gemeinsame Gehäuse 24 angrenzt. Bei der in Fig. 5a,b gezeigten Stellung erzeugt die Einstelleinrichtung 15 einen divergenten austretenden Laserstrahl 5 mit einer annähernd maximal möglichen Divergenz, d.h. der (halbe) Öffnungswinkel α des Laserstrahls 5 gegenüber der Laserstrahlachse (X-Richtung) ist um den maximal möglichen Betrag erhöht, wobei der Betrag des maximalen (halben) Öffnungswinkels α beispielsweise in der Größenordnung weniger Millirad liegen kann. Der Öffnungswinkel α sowie die Strahldivergenz des Laserstrahls 5 sind in Fig. 5b zur Veranschaulichung übertrieben groß dargestellt. Die (virtuelle) Fokusposition des aus der Einstelleinrichtung 15 von Fig. 5b austretenden divergenten Laserstrahls 5 ist im gezeigten Beispiel von dem vierten Spiegel 19 ca. fünfzig Meter weit entfernt. Die Divergenz des Laserstrahls 5 wird durch die Verringerung des Abstandes zwischen dem dritten Spiegel 18 und dem vierten Spiegel 19 gegenüber der Grundstellung erzeugt. Wie weiter oben beschrieben wurde, hängen die konkreten Werte für den (halben) Öffnungswinkel α bzw. für die (virtuelle) Fokusposition des austretenden Laserstrahls 5 von den verwendeten Brennweiten sowie von den möglichen Verfahrwegen der Bewegungseinrichtung 20 ab.

Durch die Verschiebung des weiteren Gehäuses 28 nach unten trifft der Laserstrahl 5 mit einem kleineren Strahlquerschnitt auf den vierten Spiegel 19 als dies bei der in Fig. 2a,b gezeigten Grundstellung der Fall ist. Entsprechend wird in der in Fig. 5a,b gezeigten Stellung eine nominelle Vergrößerung des Laserstrahls 5 mit einem Maßstab erzeugt, der geringer ist als der (nominelle) Vergrößerungs-Faktor M in der Grundstellung. (d.h. es gilt d/d' < M). Durch eine Verschiebung des gemeinsamen Gehäuses 24 in Richtung auf den ersten Spiegel 16 kann der Abbildungsmaßstab vergrößert werden, so dass dieser wieder dem nominellen Abbildungsmaßstab M entspricht. Bei einer solchen Verschiebung wird der Öffnungswinkel α weiter vergrößert, was für die Einstellung des gewünschten Öffnungswinkels α berücksichtigt werden kann.

Die Bewegungseinrichtung 20 kann durch eine Bewegung des weiteren Gehäuses 28 entlang der weiteren Verschiebeachse 31a in eine nicht bildlich dargestellte obere Stellung des weiteren Gehäuses 28 einen konvergenten austretenden Laserstrahl 5 erzeugen, wobei der (halbe) Öffnungswinkel α des konvergenten Laserstrahls 5 ebenfalls in der Größenordnung von wenigen Millirad liegt. Die Fokusposition des aus der Einstelleinrichtung von Fig. 5b austretenden konvergenten Laserstrahls 5 kann von dem vierten Spiegel 19 beispielsweise ebenfalls ca. fünfzig Meter weit entfernt sein.

Die bei der Verschiebung des weiteren Gehäuses 28 nach oben auftretende Veränderung des Abbildungsmaßstabs (d/d' > M) kann kompensiert werden, indem der Abstand zwischen dem zweiten und dem dritten Spiegel 17, 18 relativ zum ersten Spiegel 16 vergrößert wird, so dass ein konvergenter austretender Laserstrahl 5 mit einem Strahldurchmesser d erzeugt wird, der dem nominellen Abbildungsmaßstab (d/d' = M) entspricht. Bei einer solchen Verschiebung nimmt der Öffnungswinkel α geringfügig ab.

Bei der Verschiebung des weiteren Gehäuses 28 wird der austretende Laserstrahl 5 in Y-Richtung versetzt, d.h. dieser trifft mit einem lateralen Versatz auf den ersten Umlenkspiegel 9 (vgl. Fig. 1), der in der Strahlführungseinrichtung 3 auf die Einstelleinrichtung 15 folgt. Um diesen Strahlversatz zu kompensieren, können der erste Umlenkspiegel 9 sowie ein weiterer, diesem im Strahlweg nachfolgender Umlenkspiegel 10 um eine jeweilige, in Z-Richtung verlaufende Kippachse verschwenkbar und/oder in Y-Richtung verschiebbar ausgebildet werden. Die Verkippung bzw. Verschiebung der Umlenkspiegel 9, 10 wird so aufeinander abgestimmt, dass der Laserstrahl 5 auf den nachfolgenden Umlenkspiegel 11 an der gewünschten Position (und parallel zur X-Richtung, d.h. im richtigen Winkel ausgerichtet) auftrifft. Es versteht sich, dass der Ausgleich des Strahlversatzes alternativ oder zusätzlich auch mit Hilfe der weiteren Umlenkspiegel 11, 12 oder auf andere Weise erfolgen kann, damit sichergestellt ist, dass der Laserstrahl 5 wie gewünscht von der Fokussierlinse 6 auf die Zielposition B fokussiert wird.

Bei den in Fig. 3a,b bis Fig. 5a,b gezeigten Stellungen der Bewegungseinrichtung 20 sowie bei der nicht bildlich dargestellten Stellung, in welcher ein konvergenter Laserstrahl 5 gebildet wird, treten nur geringe Aberrationen auf. Bei der Verschiebung des zweiten bis vierten Spiegels 17, 18, 19 bleibt zudem die Energieverteilung des Laserstrahls 5 über den Strahlquerschnitt erhalten. Die hier beschriebene Einstelleinrichtung 15 mit dem ersten und vierten Spiegel 16, 19, die als Paraboloid-Spiegel ausgebildet sind, sowie mit dem zweiten und dritten Spiegel 17, 18, die als Ellipsoid-Spiegel ausgebildet sind, ermöglicht zudem eine besonders kompakte und daher hinsichtlich des benötigten Bauraums besonders vorteilhafte Realisierung der Einstelleinrichtung 15.

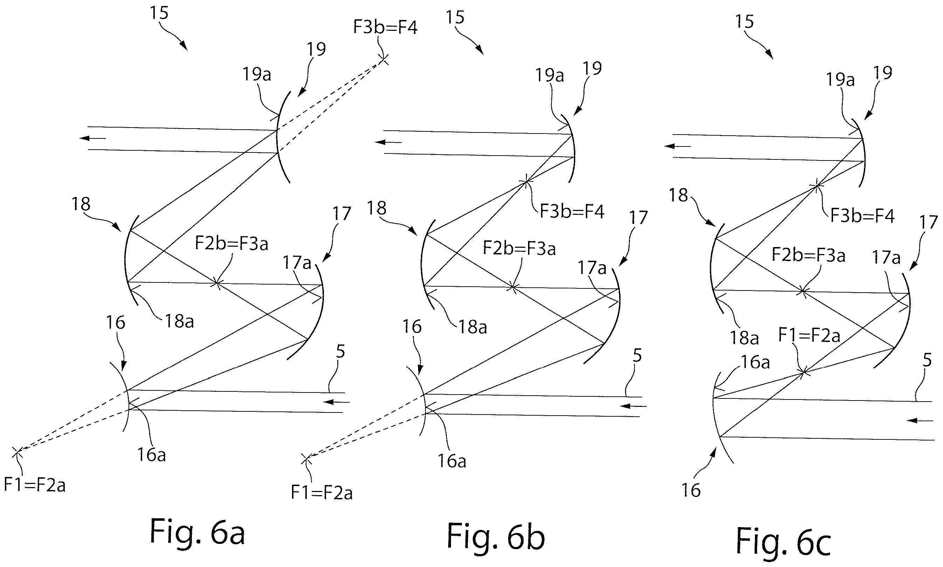

Bei der in Fig. 2a,b bis Fig. 5a,b gezeigten Einstelleinrichtung 15, bei welcher die reflektierenden Oberflächen 16a, 18a des ersten und des dritten Spiegels 16, 18 konvex gekrümmt sind und bei welcher die zweite und die vierte reflektierende Oberfläche 17a, 19a des zweiten bzw. des vierten Spiegels 17, 19 konkav gekrümmt sind, wird im Strahlengang zwischen den vier Spiegeln 16 bis 19 kein Zwischenfokus erzeugt. Alternativ ist es auch möglich, die Einstelleinrichtung 15 so auszubilden, dass einer, zwei oder drei Zwischenfoki im Strahlengang zwischen den einzelnen Spiegeln 16 bis 19 erzeugt werden, wie nachfolgend anhand von **Fig. 6a-c** näher beschrieben wird, welche die Einstelleinrichtung 15 analog zu Fig. 2a,b jeweils in der Grundstellung zeigen. Bei den in Fig. 6a-c gezeigten Darstellungen sind der erste und der vierte Spiegel 16, 19 wie weiter oben beschrieben als Off-Axis-Paraboloidspiegel ausgebildet und der zweite und der dritte Spiegel 17, 18 sind als Ellipsoid-Spiegel ausgebildet.

Bei der in Fig. 6a gezeigten Einstelleinrichtung 15 sind die reflektierenden Oberflächen 17a, 18a des zweiten und des dritten Spiegels 17, 18 konkav gekrümmt, während die reflektierenden Oberflächen 16a, 19a des ersten und des vierten Spiegels 16, 19 konvex gekrümmt sind. Auf diese Weise wird zwischen dem zweiten und dem dritten Spiegel 17, 18 ein Zwischenfokus erzeugt. Bei der in Fig. 6b gezeigten Einstelleinrichtung 15 ist die reflektierende Oberfläche 16a des ersten Spiegels 16 konvex gekrümmt, während die reflektierenden Oberflächen 17a bis 19a des zweiten bis vierten Spiegels 17 bis 19 konkav gekrümmt sind, wodurch ein zweiter Zwischenfokus zwischen dem dritten Spiegel 18 und dem vierten Spiegel 19 gebildet wird. Bei der in Fig.

6c gezeigten Einstelleinrichtung 15 sind die reflektierenden Oberflächen 16a bis 19a aller vier Spiegel 16 bis 19 konkav gekrümmt, wodurch zwischen dem ersten und dem zweiten Spiegel 16, 17 ein dritter Zwischenfokus gebildet wird. Es versteht sich, dass die in Fig. 6a-c gezeigten Einstelleinrichtungen 15 mit einer auf die weiter oben beschriebene Weise ausgebildeten Bewegungseinrichtung 20 versehen werden können, um sowohl den Strahldurchmesser d als auch den Öffnungswinkel α des Laserstrahls 5 einzustellen.

Es versteht sich ebenfalls, dass die Bewegungseinrichtung 20 auch auf andere als die in Fig. 2a,b bis Fig. 6a,b gezeigte Weise ausgebildet sein kann. Auch kann die Einstelleinrichtung 15 dazu genutzt werden, eine nominelle Verkleinerung des Laserstrahls 5 mit einem Verkleinerungsmaßstab 1 / M zu erzeugen, indem die Strahlrichtung des Laserstrahls 5 umgekehrt wird. Die Einstelleinrichtung 15 mit der Bewegungseinrichtung 20 bzw. die Strahlführungseinrichtung 3 kann auch in anderen optischen Anordnungen als in der weiter oben beschriebenen EUV-Strahlungserzeugungsvorrichtung 1 sinnvoll eingesetzt werden, bei denen eine Einstellung sowohl des Strahldurchmessers d als auch des Öffnungswinkels α eines Laserstrahls 5 erforderlich ist, insbesondere bei optischen Anordnungen, welche einen sehr langen Strahlweg aufweisen bzw. sehr hohe Leistungen erfordern. Eine solche Strahlführungseinrichtung 3 kann beispielsweise in einer Laserbearbeitungsmaschine für Laserschweiß- und/oder Laserschneidanwendungen eingesetzt werden.

**Patentansprüche**

1. Strahlführungseinrichtung (3) zur Führung eines Laserstrahls (5), insbesondere in Richtung auf einen Zielbereich (B) zur Erzeugung von EUV-Strahlung (14), umfassend:

eine Einstelleinrichtung (15) zur Einstellung eines Strahldurchmessers (d) und eines Öffnungswinkels (α) des Laserstrahls (5), die Einstelleinrichtung (15) umfassend:

einen ersten Spiegel (16) mit einer ersten gekrümmten reflektierenden Oberfläche (16a), einen zweiten Spiegel (17) mit einer zweiten gekrümmten reflektierenden Oberfläche (17a), einen dritten Spiegel (18) mit einer dritten gekrümmten reflektierenden Oberfläche (18a), einen vierten Spiegel (19) mit einer vierten gekrümmten reflektierenden Oberfläche (19a), sowie eine Bewegungseinrichtung (20), die ausgebildet ist, zur Einstellung des Strahldurchmessers (d) und des Öffnungswinkels (α) des Laserstrahls (5) die erste und die vierte reflektierende Oberfläche (16a, 19a) relativ zueinander zu bewegen sowie unabhängig davon die zweite und die dritte reflektierende Oberfläche (17a, 18a) gemeinsam relativ zu der ersten und der vierten reflektierenden Oberfläche (16a, 19a) zu bewegen.

2.  Strahlführungseinrichtung nach Anspruch 1, bei welcher die erste und dritte reflektierende Oberfläche (16a, 18a) konvex gekrümmt sind und bei welcher die zweite und vierte reflektierende Oberfläche (17a, 19a) konkav gekrümmt sind.

3.  Strahlführungseinrichtung nach Anspruch 1 oder 2, bei welcher der zweite Spiegel und der dritte Spiegel als bevorzugt nicht-symmetrische Ellipsoidspiegel (17, 18) ausgebildet sind.

4.  Strahlführungseinrichtung nach einem der vorhergehenden Ansprüche, bei welcher der erste Spiegel (17) und der vierte Spiegel (19) als Parabolspiegel, insbesondere als Off-Axis Parabolspiegel, ausgebildet sind.

5.  Strahlführungseinrichtung nach einem der vorhergehenden Ansprüche, bei welcher die Bewegungseinrichtung (20) für eine relative Bewegung des ersten Spiegels (16) und des vierten Spiegels (19) ausgehend von einer Grundstellung ausgebildet ist, in der eine Fokusposition (F1) des ersten Spiegels (16) mit einer ersten Fokusposition (F2a) des zweiten Spiegels (17), eine zweite Fokusposition (F2b) des zweiten Spiegels (17) mit einer ersten Fokusposition (F3a) des dritten Spiegels (18) sowie eine zweite Fokusposition (F3b) des dritten Spiegels (18) mit einer Fokusposition (F4) des vierten Spiegels (19) übereinstimmt.

6.  Strahlführungseinrichtung nach einem der vorhergehenden Ansprüche, bei welcher die Bewegungseinrichtung (20) zur gemeinsamen Verschiebung des zweiten und dritten Spiegels (17, 18) entlang einer gemeinsamen Verschiebeachse (30a) ausgebildet ist.

7.  Strahlführungseinrichtung nach einem der vorhergehenden Ansprüche, bei welcher die Laserstrahlachse (33a) des Laserstrahls (5) zwischen dem ersten Spiegel (16) und dem zweiten Spiegel (17) und die Laserstrahlachse des Laserstrahls (5) zwischen dem dritten Spiegel (18) und dem vierten Spiegel (19) parallel zueinander und bevorzugt parallel zu der gemeinsamen Verschiebeachse (30a) verlaufen.

8.  Strahlführungseinrichtung nach einem der vorhergehenden Ansprüche, bei welcher die Bewegungseinrichtung (20) zur Verschiebung des ersten und/oder des vierten Spiegels (16, 19) entlang einer weiteren Verschiebeachse (31a) ausgebildet ist, die bevorzugt parallel zur gemeinsamen Verschiebeachse (30a) verläuft.

9.  Strahlführungseinrichtung nach einem der vorhergehenden Ansprüche, bei welcher die zweite reflektierende Oberfläche (17a) des zweiten Spiegels (17) in einem festen Abstand (A) zu der dritten reflektierenden Oberfläche (18a) des dritten Spiegels (18) angeordnet ist.

10. Strahlführungseinrichtung nach Anspruch 9, bei welcher der zweite und der dritte Spiegel (17, 18) in einem festen Abstand (A) zueinander an einem gemeinsamen Träger (24) angebracht sind und bei welcher die Bewegungseinrichtung (20) ausgebildet ist, zur gemeinsamen Bewegung des zweiten und des dritten Spiegels (17, 18) relativ zu dem ersten und dem vierten Spiegel (16, 19) den gemeinsamen Träger (24) zu bewegen.

11. Strahlführungseinrichtung nach Anspruch 10, bei welcher der gemeinsame Träger als gemeinsames Gehäuse (24) ausgebildet ist, welches eine zweite Öffnung (25) zum Eintritt des Laserstrahls (5) von dem ersten Spiegel (17) und eine dritte Öffnung (26) zum Austritt des Laserstrahls (5) zu dem vierten Spiegel (19) aufweist.

12. Strahlführungseinrichtung nach einem der vorhergehenden Ansprüche, bei welcher der erste Spiegel (16) in einem Gehäuse (22) angeordnet ist, welches eine erste Öffnung (23) zum Austritt des Laserstrahls (5) zu dem zweiten Spiegel (17) aufweist und/oder bei welcher der vierte Spiegel (19) in einem weiteren Gehäuse (28) angeordnet ist, welches eine vierte Öffnung (27) zum Eintritt des Laserstrahls (5) von dem dritten Spiegel (18) aufweist.

13. Strahlführungseinrichtung nach Anspruch 12, bei welcher die Bewegungseinrichtung (20) ausgebildet ist, zur Bewegung der ersten und der vierten reflektierenden Oberfläche (16a, 19a) relativ zueinander das Gehäuse (22) und das weitere Gehäuse (28) relativ zueinander zu bewegen.

14. Strahlführungseinrichtung nach einem der vorhergehenden Ansprüche, bei welcher die Einstelleinrichtung (15) ausgebildet ist, an dem ersten Spiegel (16) und an dem zweiten Spiegel (17) eine Z-Faltung des Laserstrahls (5) zu erzeugen.

15. Strahlführungseinrichtung nach einem der vorhergehenden Ansprüche, bei welcher die Einstelleinrichtung (15) ausgebildet ist, an dem dritten Spiegel (18) und an dem vierten Spiegel (19) eine weitere Z-Faltung des Laserstrahls (5) zu erzeugen.

16. Strahlführungseinrichtung nach einem der vorhergehenden Ansprüche, die zur Führung eines $CO_2$-Laserstrahls (5) ausgebildet ist.

17. EUV-Strahlungserzeugungsvorrichtung (1), umfassend:
eine Strahlerzeugungseinrichtung (2) zur Erzeugung eines Laserstrahls (5), eine Vakuum-Kammer (4), in der zur Erzeugung von EUV-Strahlung (14) ein Target-Material (13) in einem Zielbereich (B) einbringbar ist, sowie eine Strahlführungseinrichtung (3) nach einem der vorhergehenden Ansprüche zur Führung des Laserstrahls (5) von der Strahlerzeugungseinrichtung (1) in Richtung auf den Zielbereich (B).

18. Verfahren zum Einstellen eines Strahldurchmessers (d) und eines Öffnungswinkels ($\alpha$) eines Laserstrahls (5) mittels einer Strahlführungseinrichtung (3) nach einem der Ansprüche 1 bis 16, umfassend:
Bewegen der ersten und der vierten reflektierenden Oberfläche (16a, 19a) relativ zueinander sowie gemeinsames Bewegen der zweiten und dritten reflektierenden Oberfläche (17a, 18a) relativ zu der ersten und der vierten reflektierenden Oberfläche (16a, 19a), bis der vorgegebene Strahldurchmesser (d) und der vorgegebene Öffnungswinkel ($\alpha$) erreicht sind.

**Claims**

1. A beam guiding device (3) for guiding a laser beam (5), in particular in the direction of a target region (B) for producing EUV radiation (14), comprising:
an adjustment device (15) for adjusting a beam diameter (d) and an aperture angle ($\alpha$) of the laser beam (5), said adjustment device (15) comprising:

   a first mirror (16) with a first curved reflecting surface (16a),
   a second mirror (17) with a second curved reflecting surface (17a),
   a third mirror (18) with a third curved reflecting surface (18a),
   a fourth mirror (19) with a fourth curved reflecting surface (19a), and
   a movement device (20) which is embodied, for the purposes of adjusting the beam diameter (d) and the aperture angle ($\alpha$) of the laser beam (5), to move the first reflecting surface (16a) and the fourth reflecting surface (19a) relative to one another and, independently thereof, to move the second reflecting surface (17a) and the third reflecting surface (18a) together relative to the first reflecting surface (16a) and the fourth reflecting surface (19a).

2. The beam guiding device as claimed in claim 1, wherein the first reflecting surface (16a) and the third reflecting surface (18a) have a convex curvature and wherein the second reflecting surface (17a) and the fourth reflecting surface (19a) have a concave curvature.

3. The beam guiding device as claimed in claim 1 or 2, wherein the second mirror and the third mirror are embodied as preferably nonsymmetrical ellipsoid mirrors (17, 18).

4. The beam guiding device as claimed in any one of the preceding claims, wherein the first mirror (17) and the fourth mirror (19) are embodied as parabolic mirrors, in particular as off-axis parabolic mirrors.

5. The beam guiding device as claimed in any one of the preceding claims, wherein the movement device (20) is embodied for a relative movement of the first mirror (16) and of the fourth mirror (19) proceeding from a basic position, in which a focal position (F1) of the first mirror (16) corresponds to a first focal position (F2a) of the second mirror (17), a second focal position (F2b) of the second mirror (17) corresponds to a first focal position (F3a) of the third mirror (18), and a second focal position (F3b) of the third mirror (18) corresponds to a focal position (F4) of the fourth mirror (19).

6. The beam guiding device as claimed in any one of the preceding claims, wherein the movement device (20) is embodied for common displacement of the second and third mirror (17, 18) along a common displacement axis (30a).

7. The beam guiding device as claimed in any one of the preceding claims, wherein the laser beam axis (33a) of the laser beam (5) between the first mirror (16) and the second mirror (17) and the laser beam axis of the laser beam (5) between the third mirror (18) and the fourth mirror (19) extend parallel to one another and preferably extend parallel to the common displacement axis (30a).

8. The beam guiding device as claimed in any one of the preceding claims, wherein the movement device (20) is embodied to displace the first and/or the fourth mirror (16, 19) along a further displacement axis (31a), which preferably extends parallel to the common displacement axis (30a).

9. The beam guiding device as claimed in any one of the preceding claims, wherein the second reflecting surface (17a) of the second mirror (17) is arranged at a fixed distance (A) from the third reflecting surface (18a) of the third mirror (18).

10. The beam guiding device as claimed in claim 9, wherein the second and the third mirror (17, 18) are attached to a common carrier (24) at a fixed distance (A) from one another and wherein the movement device (20) is embodied to move the common carrier (24) for the common movement of the second and the third mirror (17, 18) relative to the first mirror (16) and the fourth mirror (19).

11. The beam guiding device as claimed in claim 10, wherein the common carrier is embodied as a common housing (24), which comprises a second opening (25) for the entrance of the laser beam (5) from the first mirror (17) and a third opening (26) for the exit of the laser beam (5) to the fourth mirror (19).

12. The beam guiding device as claimed in any one of the preceding claims, wherein the first mirror (16) is arranged in a housing (22) which comprises a first opening (23) for the exit of the laser beam (5) to the second mirror (17) and/or wherein the fourth mirror (19) is arranged in a further housing (28) which comprises a fourth opening (27) for the entrance of the laser beam (5) from the third mirror (18).

13. The beam guiding device as claimed in claim 12, wherein the movement device (20) is embodied to move the housing (22) and the further housing (28) relative to one another for the purposes of moving the first reflecting surface (16a) and the fourth reflecting surface (19a) relative to one another.

14. The beam guiding device as claimed in any one of the preceding claims, wherein the adjustment device (15) is embodied to produce a Z-fold of the laser beam (5) at the first mirror (16) and at the second mirror (17).

15. The beam guiding device as claimed in any one of the preceding claims, wherein the adjustment device (15) is embodied to produce a further Z-fold of the laser beam (5) at the third mirror (18) and at the fourth mirror (19).

16. The beam guiding device as claimed in any one of the preceding claims, embodied to guide a $CO_2$ laser beam (5).

17. An EUV radiation generating apparatus (1), comprising:

a beam generating device (2) for generating a laser beam (5),
a vacuum chamber (4), into which a target material (13) is introducible in a target region (B) for the purposes of producing EUV radiation (14), and
a beam guiding device (3) as claimed in any one of the preceding claims for guiding the laser beam (5) from the beam generating device (1) in the direction of the target region (B).

18. A method for adjusting a beam diameter (d) and an aperture angle ($\alpha$) of a laser beam (5) by means of a beam guiding device (3) as claimed in any one of claims 1 to 16, comprising:

moving the first reflecting surface (16a) and the fourth reflecting surface (19a) relative to one another and moving the second reflecting surface (17a) and the third reflecting surface (18a) together relative to the first reflecting surface (16a) and the fourth reflecting surface (19a) until the predetermined beam diameter (d) and the predetermined aperture angle ($\alpha$) are reached.

**Revendications**

1. Moyen de guidage de faisceau (3) pour guider un faisceau laser (5), en particulier dans la direction d'une zone cible (B) pour générer un rayonnement EUV (14), comprenant :
un moyen de réglage (15) pour régler un diamètre de faisceau (d) et un angle d'ouverture ($\alpha$) du faisceau laser (5), le moyen de réglage (15) comprenant :

un premier miroir (16) ayant une première surface réfléchissante incurvée (16a),
un deuxième miroir (17) ayant une deuxième surface réfléchissante incurvée (17a),
un troisième miroir (18) ayant une troisième surface réfléchissante incurvée (18a),
un quatrième miroir (19) ayant une quatrième surface réfléchissante incurvée (19a) et
un moyen de déplacement (20) qui est réalisé pour déplacer les première et quatrième surfaces réfléchissantes (16a, 19a) l'une par rapport à l'autre pour régler le diamètre de faisceau (d) et l'angle d'ouverture ($\alpha$) du faisceau laser (5) et pour déplacer de façon indépendante les deuxième et troisième surfaces réfléchissantes (17a, 18a) ensemble par rapport aux première et quatrième surfaces réfléchissantes (16a, 19a).

2. Moyen de guidage de faisceau selon la revendication 1, dans lequel les première et troisième surfaces réfléchissantes (16a, 18a) ont une courbure convexe et dans lequel les deuxième et quatrième surfaces réfléchissantes (17a, 19a) ont une courbure concave.

3. Moyen de guidage de faisceau selon la revendication 1 ou 2, dans lequel le deuxième miroir et le troisième miroir sont de préférence réalisés comme des miroirs ellipsoïdes non symétriques (17, 18).

4. Moyen de guidage de faisceau selon l'une des revendications précédentes, dans lequel le premier miroir (17) et le quatrième miroir (19) sont réalisés comme des miroirs paraboliques, en particulier comme des miroirs paraboliques excentrés.

5. Moyen de guidage de faisceau selon l'une des revendications précédentes, dans lequel le moyen de déplacement (20) est réalisé pour un déplacement relatif du premier miroir (16) et du quatrième miroir (19) à partir d'une position de base dans laquelle une position focale (F1) du premier miroir (16) coïncide avec une première position focale (F2a) du deuxième miroir (17), une deuxième position focale (F2b) du deuxième miroir (17) avec une première position focale (F3a) du troisième miroir (18) et une deuxième position focale (F3b) du troisième miroir (18) avec une position focale (F4) du quatrième miroir (19).

6. Moyen de guidage de faisceau selon l'une des revendications précédentes, dans lequel le moyen de déplacement (20) est réalisé pour déplacer ensemble les deuxième et troisième miroirs (17, 18) le long d'un axe de déplacement commun (30a).

7. Moyen de guidage de faisceau selon l'une des revendications précédentes, dans lequel l'axe de faisceau laser (33a) du faisceau laser (5) entre le premier miroir (16) et le deuxième miroir (17) et l'axe de faisceau laser du faisceau laser (5) entre le troisième miroir (18) et le quatrième miroir (19) s'étendent parallèlement l'un à l'autre et de préférence parallèlement à l'axe de déplacement commun (30a).

8. Moyen de guidage de faisceau selon l'une des revendications précédentes, dans lequel le moyen de déplacement (20) est réalisé pour déplacer le premier et/ou le quatrième miroir (16, 19) le long d'un autre axe de déplacement (31a) qui s'étend de préférence parallèlement à l'axe de déplacement commun (30a).

9. Moyen de guidage de faisceau selon l'une des revendications précédentes, dans lequel la deuxième surface réfléchissante (17a) du deuxième miroir (17) est disposée à une distance fixe (A) de la troisième surface réfléchissante (18a) du troisième miroir (18).

10. Moyen de guidage de faisceau selon la revendication 9, dans lequel les deuxième et troisième miroirs (17, 18) sont montés à une distance fixe (A) l'un de l'autre sur un support commun (24) et dans lequel le moyen de déplacement (20) est réalisé pour déplacer le support commun (24) afin de déplacer ensemble les deuxième et troisième miroirs (17, 18) par rapport aux premier et quatrième miroirs (16, 19).

11. Moyen de guidage de faisceau selon la revendication 10, dans lequel le support commun est réalisé sous la forme d'un boîtier commun (24) qui présente une deuxième ouverture (25) pour l'entrée du faisceau laser (5) depuis le premier miroir (17) et une troisième ouverture (26) pour la sortie du faisceau laser (5) vers le quatrième miroir (19).

12. Moyen de guidage de faisceau selon l'une des revendications précédentes, dans lequel le premier miroir (16) est disposé dans un boîtier (22) qui présente une première ouverture (23) pour la sortie du faisceau laser (5) vers le deuxième miroir (17) et/ou dans lequel le quatrième miroir (19) est disposé dans un autre boîtier (28) qui présente une quatrième ouverture (27) pour l'entrée du faisceau laser (5) depuis le troisième miroir (18).

13. Moyen de guidage de faisceau selon la revendication 12, dans lequel le moyen de déplacement (20) est réalisé pour déplacer le boîtier (22) et l'autre boîtier (28) l'un par rapport à l'autre pour déplacer les première et quatrième surfaces réfléchissantes (16a, 19a) l'une par rapport à l'autre.

14. Moyen de guidage de faisceau selon l'une des revendications précédentes, dans lequel le moyen de réglage (15) est réalisé pour produire un pliage en Z du faisceau laser (5) sur le premier miroir (16) et sur le deuxième miroir (17).

15. Moyen de guidage de faisceau selon l'une des revendications précédentes, dans lequel le moyen de réglage (15) est réalisé pour produire un autre pliage en Z du faisceau laser (5) sur le troisième miroir (18) et sur le quatrième miroir (19).

16. Moyen de guidage de faisceau selon l'une des revendications précédentes, lequel est réalisé pour guider un faisceau laser $CO_2$ (5).

17. Dispositif de génération de rayonnement EUV (1) comprenant :
un moyen de génération de faisceau (2) pour générer un faisceau laser (5), une chambre à vide (4) dans laquelle un matériau cible (13) peut être introduit dans une zone cible (B) pour générer un rayonnement EUV (14) et un moyen de guidage de faisceau (3) selon l'une des revendications précédentes pour guider le faisceau laser (5) du moyen de génération de faisceau (1) en direction de la zone cible (B).

18. Procédé pour régler un diamètre de faisceau (d) et un angle d'ouverture ($\alpha$) d'un faisceau laser (5) au moyen d'un moyen de guidage de faisceau (3) selon l'une des revendications 1 à 16, comprenant les étapes consistant à :

déplacer les première et quatrième surfaces réfléchissantes (16a, 19a) l'une par rapport à l'autre et déplacer ensemble les deuxième et troisième surfaces réfléchissantes (17a, 18a) par rapport aux première et quatrième surfaces réfléchissantes (16a, 19a) jusqu'à ce que le diamètre de faisceau prédéfini (d) et l'angle d'ouverture prédéfini ($\alpha$) soient atteints.

Fig.1

Fig. 2a

Fig. 2b

Fig. 3a

Fig. 3b

Fig. 4a

Fig. 4b

Fig. 5a

Fig. 5b

Fig. 6a                    Fig. 6b                    Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110140008 A1
- WO 2014048563 A1